(19) Europäisches Patentamt
European Patent Office
Office européen des brevets

(11) EP 4 711 896 A1

(12) EUROPEAN PATENT APPLICATION
published in accordance with Art. 153(4) EPC

(43) Date of publication:
18.03.2026 Bulletin 2026/12

(21) Application number: 24803368.0

(22) Date of filing: 23.04.2024

(51) International Patent Classification (IPC):
G06F 3/01 (2006.01) G06T 19/00 (2011.01)
G09G 5/00 (2006.01) G09G 5/377 (2006.01)

(52) Cooperative Patent Classification (CPC):
G06F 3/01; G06T 19/00; G09G 5/00; G09G 5/377

(86) International application number:
PCT/JP2024/015844

(87) International publication number:
WO 2024/232255 (14.11.2024 Gazette 2024/46)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 11.05.2023 JP 2023078661

(71) Applicant: Sony Group Corporation
Tokyo 108-0075 (JP)

(72) Inventor: ISHIHARA, Atsushi
Tokyo 108-0075 (JP)

(74) Representative: D Young & Co LLP
3 Noble Street
London EC2V 7BQ (GB)

# (54) INFORMATION PROCESSING DEVICE, INFORMATION PROCESSING METHOD, AND RECORDING MEDIUM

(57) An information processing apparatus according to the present technology includes a transparency control unit that performs scene determination related to at least one of action of a user or a positional relationship between the user and a real object in a case where the real object exists between a viewpoint position and a virtual object, and controls transparency of the real object on the basis of a result of the scene determination.

FIG. 1

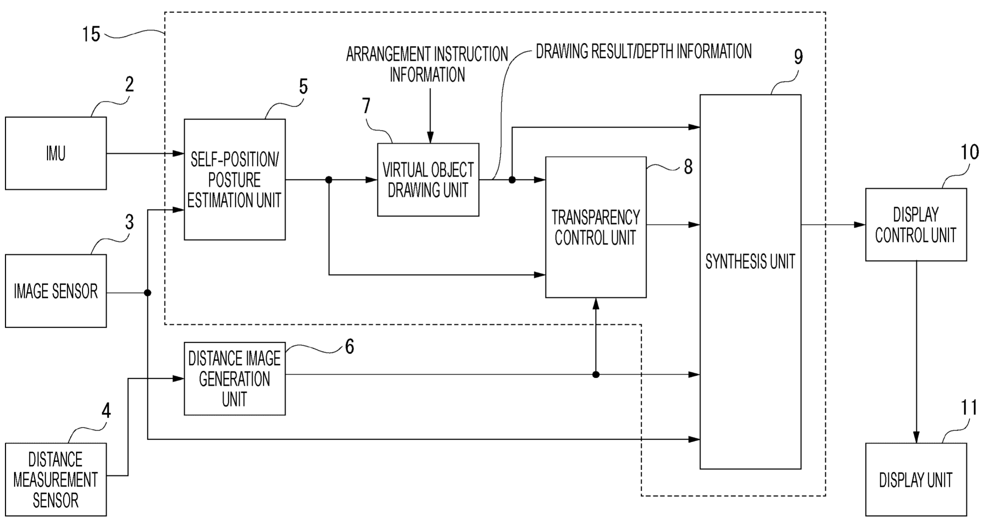


1 (INFORMATION PROCESSING APPARATUS)

EP 4 711 896 A1

## Description

### TECHNICAL FIELD

The present technology relates to an information processing apparatus, an information processing method, and a recording medium, and particularly relates to a technical field related to transparency control of a real object in a case where the real object exists between a viewpoint position and a virtual object.

### BACKGROUND ART

In recent years, a virtual reality (VR) technology and an augmented reality (AR) technology have been widely spread.

Patent Document 1 below discloses a technology of hiding a real object (increasing transparency of the real object) in a case where the real object (actual object) exists in front of a virtual object on a line-of-sight of a user (observer) who observes the virtual object.

This makes it possible to, in a case where a real object exists in front of a virtual object to which a user is paying attention, prevent the virtual object from being invisible as a result of the virtual object being blocked by the real object.

### CITATION LIST

### PATENT DOCUMENT

Patent Document 1: WO 2022/044124 A

### SUMMARY OF THE INVENTION

### PROBLEMS TO BE SOLVED BY THE INVENTION

However, there may be a case where it is not desirable to increase transparency of a real object only in response to the real object existing in front of a virtual object, in other words, only in response to the real object existing between a viewpoint position and the virtual object.

For example, in a case where a distance between a user and the real object is short or in a case where a moving speed of the user is fast, if the transparency of the real object in front of the virtual object is increased, the user is less likely to notice approach to the real object, and the user may collide with the real object.

In addition, in a case where the real object is the hand of the user and the virtual object is a virtual object as an object to be gripped that is assumed to be gripped by the hand of the user, the real object exists in front of the virtual object. In this case, if the transparency of the hand as the real object is increased, it is difficult for the user to grasp a sense of distance to the virtual object that is the object to be gripped, and there is a possibility that the user cannot grip the object to be gripped as intended.

Furthermore, also in a case where some kinds of operation button are assumed as a virtual object and a scene is assumed where the operation button is to be operated by the hand of the user as a real object, the real object exists between the position of the user and the virtual object. However, also in this case, if the transparency of the hand as the real object is increased only in response to the real object existing in front of the virtual object, it is difficult for the user to grasp a positional relationship between the button to be operated and the hand, and there is a possibility that the user cannot perform button operation as intended.

The present technology has been made in view of the above circumstances, and an object thereof is to implement appropriate control according to a scene regarding transparency control of a real object in a case where the real object exists between a viewpoint position and a virtual object.

### SOLUTIONS TO PROBLEMS

An information processing apparatus according to the present technology includes a transparency control unit that performs scene determination related to at least one of action of a user or a positional relationship between the user and a real object in a case where the real object exists between a viewpoint position and a virtual object, and controls transparency of the real object on the basis of a result of the scene determination.

According to the above configuration, for example, the transparency of the real object existing in front of the virtual object is controlled on the basis of the result of the scene determination related to the action of the user such as a speed at which the user moves, whether or not the user tries to grip the virtual object in a pseudo manner, whether or not the user tries to operate the virtual object that is a button, or the like, or the result of the scene determination related to the positional relationship between the user and the real object such as whether or not a distance between the user and the real object is short.

Furthermore, an information processing method according to the present technology is an information processing method including performing scene determination related to at least one of action of a user or a positional relationship between the user and a real object in a case where the real object exists between a viewpoint position and a virtual object, and controlling transparency of the real object on the basis of a result of the scene determination.

Furthermore, a recording medium according to the present technology is a recording medium in which a program readable by a computer device is recorded, the program causing the computer device to implement a function of performing scene determination related to at least one of action of a user or a positional relationship between the user and a real object, in a case where the real object exists between a viewpoint position and a virtual object, and controlling transparency of the real object on the basis of a result of the scene determination.

The information processing apparatus according to the present technology can be implemented by the information processing method and the recording medium.

BRIEF DESCRIPTION OF DRAWINGS

Fig. 1 is a block diagram illustrating a configuration example of an information processing apparatus as a first embodiment according to the present technology.
Fig. 2 is a view schematically illustrating a transparency control method in related art.
Fig. 3 is a flowchart indicating a specific processing procedure example for implementing a transparency control method as the first embodiment.
Fig. 4 is an explanatory diagram of a dimming unit to be used in another example of the first embodiment.
Fig. 5 is a block diagram illustrating a configuration example of the information processing apparatus as another example of the first embodiment.
Fig. 6 is an explanatory diagram regarding a transparency control method as a second embodiment.
Fig. 7 is a block diagram illustrating a configuration example of an information processing apparatus corresponding to a case where a first pattern is adopted in the second embodiment.
Fig. 8 is a flowchart indicating a specific processing procedure example for implementing a transparency control method corresponding to a case where the first pattern is adopted in the second embodiment.
Fig. 9 is a block diagram illustrating a configuration example of the information processing apparatus corresponding to a case where a second pattern is adopted in the second embodiment.
Fig. 10 is a flowchart indicating a specific processing procedure example for implementing a transparency control method corresponding to a case where the second pattern is adopted in the second embodiment.
Fig. 11 is an explanatory diagram of a transparency control method as a third embodiment.
Fig. 12 is a block diagram illustrating a configuration example of an information processing apparatus as the third embodiment.
Fig. 13 is a flowchart indicating a specific processing procedure example for implementing a transparency control method as the third embodiment.
Fig. 14 is an explanatory diagram of an AR system assumed in a fourth embodiment.
Fig. 15 is an explanatory diagram of transparency control as the fourth embodiment.
Fig. 16 is a block diagram illustrating a configuration example of a display device in the fourth embodiment.
Fig. 17 is a block diagram illustrating a configuration example of an information processing apparatus as the fourth embodiment.
Fig. 18 is a flowchart indicating a specific processing procedure example for implementing a transparency control method as the fourth embodiment.
Fig. 19 is an explanatory diagram of a transparency control method as a fifth embodiment.
Fig. 20 is a block diagram illustrating a configuration example of an information processing apparatus as the fifth embodiment.
Fig. 21 is a flowchart indicating a specific processing procedure example for implementing the transparency control method as the fifth embodiment.

MODE FOR CARRYING OUT THE INVENTION

Hereinafter, embodiments according to the present technology will be described in the following order with reference to the accompanying drawings.

<1. First embodiment>

[1-1. Configuration example of information processing apparatus]
[1-2. Transparency control method as first embodiment]
[1-3. Processing procedure]
[1-4. Another example of first embodiment]

<2. Second embodiment>
<3. Third embodiment>
<4. Fourth embodiment>
<5. Fifth embodiment>
<6. Modifications>
<7. Program and recording medium>
<8. Summary of embodiments>
<9. Present technology>

<1. First embodiment>

[1-1. Configuration example of information processing apparatus]

Fig. 1 is a block diagram illustrating a configuration example of an information processing apparatus 1 as a first embodiment according to the present technology.

The information processing apparatus 1 is configured as an apparatus for allowing a user to feel a virtual space. Specifically, the information processing apparatus 1 in the present example is configured to allow the user to feel an augmented reality (AR) space.

There are a video see-through (VST) scheme that presents the real world by a captured image and an optical see-through (OST) scheme that causes a user to directly view the real world without passing through a captured image as a scheme for allowing the user to feel the AR space. It is assumed that the information processing apparatus 1 of the present example has a configuration supporting the former VST scheme.

Although various apparatus forms can be considered as the information processing apparatus 1, here, a case where the information processing apparatus 1 is configured as a head mounted display (HMD) will be exemplified.

Here, in the present specification, "AR" includes a concept of "mixed reality (MR)".

As illustrated, the information processing apparatus 1 includes an inertial measurement unit (IMU) 2, an image sensor 3, a distance measurement sensor 4, a self-position/posture estimation unit 5, a distance image generation unit 6, a virtual object drawing unit 7, a transparency control unit 8, a synthesis unit 9, a display control unit 10, and a display unit 11.

The IMU 2 includes a triaxial acceleration sensor and a triaxial angular velocity sensor, and outputs triaxial acceleration information and triaxial angular velocity information.

The image sensor 3 includes, for example, a complementary metal oxide semiconductor (CMOS) type or a charge coupled device (CCD) type solid-state imaging element, and obtains a captured image obtained by imaging the real world.

Although not illustrated, in the information processing apparatus 1 as the HMD in the present example, an imaging lens is provided at a position in the vicinity of the eyes of the user who wears the information processing apparatus 1, and the image sensor 3 receives light from a subject input via the imaging lens and performs photoelectric conversion, thereby obtaining a captured image capturing the real world from the user's viewpoint.

The distance measurement sensor 4 performs distance measurement for the real world. In the present example, in order to obtain a distance image (depth map) as a three-dimensional measurement result of the real world, a sensor capable of performing distance measurement in units of pixels is used as the distance measurement sensor 4. Specifically, in the present example, as the distance measurement sensor 4, a sensor capable of performing distance measurement supporting a ToF scheme in units of pixels is used. As is well known, the time of flight (ToF) scheme is a scheme of performing distance measurement on the basis of a time length until light emitted to a distance measurement target is reflected by the distance measurement target and returns. Thus, the distance measurement sensor 4 includes a light source for irradiating (for example, irradiation with invisible light such as IR light) the distance measurement target with light, and a light receiving unit in which a plurality of pixels having light receiving elements is two-dimensionally arranged. In addition, although not illustrated, the distance measurement sensor 4 is provided with an irradiation optical system for irradiating the distance measurement target with light emitted from the light source and a light receiving optical system for guiding reflected light from the distance measurement target to the light receiving unit.

A distance measurement unit including the irradiation optical system, the light receiving optical system, and the distance measurement sensor 4 is provided in the information processing apparatus 1 so as to perform distance measurement for an area within an imaging range of the image sensor 3.

The distance image generation unit 6 generates a distance image on the basis of a distance measurement result for each pixel by the distance measurement sensor 4.

Note that a configuration for obtaining the distance image is not limited to the above configuration. For example, it is also conceivable to adopt a configuration in which distance estimation is performed by machine learning such as convolutional neural network (CNN) on the basis of a captured image by the image sensor, a configuration in which distance measurement (for example, a semi-global matching method, or the like) based on parallax using a stereo camera, or the like, is performed.

The self-position/posture estimation unit 5, the virtual object drawing unit 7, the transparency control unit 8, and the synthesis unit 9 constitute a calculation unit 15 for generating an image for allowing the user to feel the AR space on the basis of the detection information by the IMU 2, the captured image by the image sensor 3, and the distance image obtained by the distance image generation unit 6.

The calculation unit 15 can be configured by one or a plurality of computers.

In the calculation unit 15, the self-position/posture estimation unit 5 estimates a self-position and a posture of the information processing apparatus 1 on the basis of the detection information by the IMU 2 (in this example, triaxial acceleration information and triaxial angular velocity information) and the captured image by the image sensor 3.

Examples of a method for estimating the self-position and the posture include a method such as simultaneous localization and mapping (SLAM) or visual inertial odometry (VIO). For example, in the VIO, it is assumed that the self-position and the posture are estimated by a technique such as an inertial navigation system (INS) using an output of the IMU 2 having a higher output rate than that of the image sensor 3.

Note that, as a method not using the detection information by the IMU 2, it is also conceivable to adopt a method such as visual odometry (VO).

The self-position/posture estimation unit 5 estimates the self-position and the posture of the information processing apparatus 1 in the world coordinate system using, for example, the method exemplified above.

Regarding the self-position/posture estimation unit 5, a general central processing unit (CPU) or graphics processing unit (GPU) is often used for the estimation processing of the self-position and the posture, but a processor specialized for image processing or machine learning processing can also be used.

The virtual object drawing unit 7 draws a virtual object using a 3D computer graphics (CG) technology on the basis of the self-position and the posture estimated by the self-position/posture estimation unit 5, and outputs a drawing result and depth information thereof. Here, as the depth information of the virtual object, the depth (distance from the self-position) of the virtual object in the world coordinates is output as a depth map.

Hereinafter, the drawing result of the virtual object may be referred to as a "virtual object image".

Hereinafter, the virtual object is denoted by a reference sign "Vo". Further, hereinafter, an object actually existing in the real world is expressed as a real object Ro.

Various ways of arranging the virtual object Vo in the AR space can be considered.

For example,

1) A position having a predetermined positional relationship with respect to a certain reference position is set as an arrangement position.

As an example, it is conceivable that a position away from the self-position by a predetermined distance in a predetermined direction is set as the arrangement position of the virtual object Vo assuming that the reference position is the self-position.

Alternatively, it is also conceivable that a marker is arranged in the real space, and a position away from a position detected by the marker by a predetermined distance in a predetermined direction is set as the arrangement position of the virtual object Vo assuming that the reference position is the position of the marker.

2) The virtual object Vo is superimposed on the real object Ro.

For example, a virtual object is arranged at a position such that the virtual object is superimposed on a predetermined real object Ro captured in the captured image by the image sensor 3.

3) The arrangement position of the virtual object Vo is set at a predetermined position in the AR space.

For example, the arrangement position of the virtual object Vo is set in advance on the map. As an example, for example, a predetermined position, or the like, of a real object such as a wall or a window is determined as the arrangement position of the virtual object Vo.

In the present example, for the sake of explanation, it is assumed that the virtual object Vo is determined to be arranged at a predetermined position in the AR space as in the above 3). In this case, arrangement instruction information is input to the virtual object drawing unit 7 as illustrated in the drawing. The arrangement instruction information includes information regarding the arrangement position and information regarding an arrangement direction (posture) of the virtual object Vo in the world coordinate system.

The virtual object drawing unit 7 in the present example draws the virtual object Vo according to the arrangement position information. In this event, a position and a posture of a two-dimensional plane on which the virtual object Vo is to be projected in the drawing are determined on the basis of the self-position and the posture estimated by the self-position/posture estimation unit 5.

In the present example, a GPU is used for the processing of drawing the virtual object Vo by the virtual object drawing unit 7. However, this is an example, and it is also conceivable to use a CPU for the processing of drawing the virtual object Vo.

In a case where the real object Ro exists between the viewpoint position and the virtual object Vo, the transparency control unit 8 performs scene determination related to at least one of action of the user or a positional relationship between the user and the real object Ro, and performs processing of controlling the transparency of the real object Ro on the basis of a result of the scene determination.

Although details will be described later, the transparency control unit 8 according to the present embodiment generates an alpha map for controlling the transparency of the real object Ro on the basis of a distance image output from the distance image generation unit 6, depth information (depth information for each pixel of the virtual object image) regarding a drawing result (virtual object image) of the virtual object Vo output from the virtual object drawing unit 7, and the information regarding the self-position and the posture estimated by the self-position/posture estimation unit 5, and outputs the alpha map to the synthesis unit 9.

The alpha map is information indicating opacity (alpha value) for each pixel with respect to a VST image (captured image by the image sensor 3).

In the present example, it is assumed that opacity of 0 represents completely transparent and opacity of 1 represents complete opaque.

The synthesis unit 9 synthesizes the captured image (VST image) by the image sensor 3 and the virtual object image on the basis of the drawing result (virtual object image) and the depth information of the virtual object Vo output by the virtual object drawing unit 7 and the distance image output by the distance image generation unit 6.

Specifically, as the synthesis in this case, processing is performed such that pixels for which positions do not overlap with the position of the virtual object image in the captured image are left, and concerning pixels for which positions overlap with the position of the virtual object image, pixels having smaller depth values are left, that is, closer pixels are left on the basis of depths of the pixels specified from the distance image and depths of the pixels for which the positions overlap with the positions of the pixels in the virtual object image.

By such synthesis processing, in a field of view of the VST image, in a case where the real object Ro overlaps behind the virtual object Vo, pixels of the virtual object Vo existing on the front side are left, and conversely, in a case where the virtual object Vo overlaps behind the real object Ro, the pixels of the real object Ro existing on the front side are left.

In addition, the synthesis unit 9 adjusts transparency of the synthesis image based on the alpha map output by the transparency control unit 8. Specifically, the synthesis unit 9 adjusts the transparency by performing alpha blending with the pixels of the virtual object image for which the positions overlap with the positions of the pixels for the pixels of the captured image for which opacity is specified to a value less than 1 by the alpha map.

In the present example, a GPU is used for the above synthesis processing by the synthesis unit 9. However, this is an example, and it is also conceivable to use a CPU for the synthesis processing.

The output image by the synthesis unit 9 is displayed to the user via a display system including a display control unit 10 and a display unit 11.

The display unit 11 includes, for example, a display panel such as a liquid crystal display (LCD) panel or an organic electro luminescence (EL) panel, and displays an image to the user. In the case of the HMD, the display unit 11 also includes an optical system for allowing the user to visually recognize the display image by the display panel.

The display control unit 10 includes a driver circuit of the display panel in the display unit 11, and drives the display panel on the basis of the output image of the synthesis unit 9. As a result, the output image of the synthesis unit 9, that is, the image for allowing the user to feel the AR space is displayed.

[1-2. Transparency control method as first embodiment]

Here, as described above, Patent Document 1 discloses a technology of hiding a real object (real object) Ro (increasing the transparency of the real object Ro) in a case where the real object Ro exists in front of the virtual object Vo on the line-of-sight of the user (observer) who observes the virtual object Vo. With this technology, it is possible to prevent the virtual object Vo from becoming invisible as a result of being blocked by the real object Ro in a case where the real object Ro exists in front of the virtual object Vo to which the user is paying attention.

Fig. 2 schematically indicates a transparency control method in related art as a transparency control method described in Patent Document 1. In a case where the real object Ro exists in front of the virtual object Vo as illustrated in Fig. 2A, the real object Ro existing in front of the virtual object Vo is made transparent as illustrated in Fig. 2B.

However, if the real object Ro in front of the virtual object Vo is made transparent as in Patent Document 1, in a case where a distance between the user and the real object Ro is short or in a case where a moving speed of the user is fast, it is difficult for the user to notice approach to the real object Ro, and the user may collide with the real object Ro.

Thus, in the first embodiment, the above-described transparency control unit 8 performs transparency control for avoiding collision between the user and the real object Ro as described above.

Specifically, in a case where the real object exists between the viewpoint position and the virtual object, the transparency control unit 8 determines whether or not there is a risk of collision between the user and the real object Ro on the basis of at least one of the distance between the user and the real object Ro or the moving speed of the user, and performs control to decrease transparency of the real object Ro in a case where it is determined that there is the risk.

Here, the above-described "viewpoint position" represents a position of the viewpoint of the user in the AR space. The "viewpoint position" described here is not necessarily strictly positions of the user's eyes, and for example, it may be a center position of the user's face, a center position of the entire user, or a position of the own apparatus (information processing apparatus 1) may be the viewpoint position of the user.

The "viewpoint position" may be any position where the viewpoint of the user can be regarded to exist.

In the present example, the transparency control unit 8 determines whether or not the distance between the user and the real object Ro is equal to or less than a threshold, and performs control to decrease the transparency of the real object Ro in a case where the distance is equal to or less than the threshold.

In addition, the transparency control unit 8 in the present example determines whether or not the moving speed of the user is equal to or higher than a threshold as determination as to whether or not it is a scene where there is a risk of collision, and performs control to decrease the transparency of the real object Ro in a case where the moving speed is equal to or higher than the threshold.

Hereinafter, the distance between the real object Ro in front of the virtual object Vo and the user is referred to as a "distance D", and the moving speed of the user is referred to as a "moving speed S".

Furthermore, in the transparency control of the real object Ro based on the distance between the user and the real object Ro, the transparency control unit 8 in the present example gradually decreases the transparency of the real object Ro according to the distance D.

Specifically, in the information processing apparatus 1 in the present example, a first threshold THd1 and a second threshold THd2 smaller than the first threshold THd1 are determined as the threshold for the distance D, and the transparency control unit 8 controls to decrease the transparency of the real object Ro in accordance with the distance D in a case where the distance D is equal to or less than the first threshold THd1 and exceeds the second threshold THd2, and controls the transparency of the real object Ro to be 0 in a case where the distance D is equal to or less than the second threshold THd2.

More specifically, the transparency control unit 8 in the present example determines opacity ($\alpha$) in a region where the distance D is equal to or less than the first threshold THd1 and exceeds the second threshold THd2, for example, as follows.

$$\alpha = 1 - (D/1.5 - 1)$$

In addition, the transparency control unit 8 sets the opacity of the real object Ro to 1 in a case where the distance D is equal to or less than the second threshold THd2, and sets the opacity of the real object Ro to 0 in a case where the distance D exceeds the first threshold THd1.

In other words, in this case, in a region where the distance D between the user and the real object Ro existing between the viewpoint position and the virtual object Vo exceeds the first threshold THd1 (in a case where it is estimated that there is no risk of collision), the opacity becomes 0 and the real object Ro is in a complete transparent state, and in a region where the distance D is equal to or less than the first threshold THd1, the opacity becomes greater than 0 and the transparency of the real object Ro is decreased. Then, in a region where the distance D is equal to or less than the first threshold THd1 and exceeds the second threshold THd2, the opacity increases as the distance D decreases and the transparency of the real object Ro is gradually decreased, and when the distance D becomes equal to or less than the second threshold THd2, the opacity becomes 1 and the real object Ro is in a completely opaque state.

Note that, as described for confirmation, in a case where the real object Ro exists in front of the virtual object Vo, the synthesis unit 9 performs processing of leaving the pixels on the virtual object Vo side, and for the pixels of the captured image (pixels of the real object Ro) for which the opacity is designated to be less than 1 by the transparency control unit 8, performs alpha blending with the pixels of the virtual object image for which positions overlap with the positions of the pixels to adjust the transparency.

Thus, in a case where the real object Ro exists in front of the virtual object Vo, the transparency control of the real object Ro in the region of THd1 $\geq$ D > THd2 as described above is implemented.

In addition, as described for confirmation, in the present example, the real object Ro existing in front of the virtual object Vo is in a transparent state in the region where the distance D exceeds the first threshold THd1, and thus, in the region, an effect of improving visibility of the virtual object Vo existing behind the real object Ro can be obtained in a similar manner to the case of Patent Document 1.

By performing the transparency control according to the distance D as described above, transparency of the real object Ro can be increased in a state where a risk of collision with the real object Ro is low, and the transparency of the real object Ro can be decreased according to increase in risk of collision with the real object Ro. It is therefore possible to achieve both the effect of improving visibility of the virtual object Vo behind the real object Ro and the effect of preventing collision with the real object Ro.

Here, the transparency control unit 8 obtains the distance D on the basis of the depth information of the corresponding real object Ro in the distance image input from the distance image generation unit 6. For example, it is conceivable to set a depth having the smallest value among the depths of the pixels of the corresponding real object Ro as the distance D. Alternatively, it is also conceivable to calculate an average value of the depths of the pixels of the corresponding real object Ro as the distance D. The distance D may be obtained on the basis of depth information of the corresponding real object Ro in the distance image input from the distance image generation unit 6.

In addition, the transparency control unit 8 obtains a moving speed S on the basis of the self-position estimated by the self-position/posture estimation unit 5.

For example, it is conceivable to obtain the moving speed S as a change amount $\Delta P$ in self-position between frames. In this case, when the self-position in a current frame is P1(x, y, z) and the self-position in the previous frame is P0(x, y, z), a change amount $\Delta P(x, y, z)$ can be obtained as a norm of P1 and P0 as follows.

$$\Delta P = ||P1 - P0||$$

Note that in order to suppress influence of noise of the sensor, the moving speed S may be obtained as a moving average of the change amount $\Delta P$ corresponding to N frames.

Furthermore, it is also conceivable to obtain the moving speed S as a speed obtained by first-order differentiating the self-position.

Furthermore, the transparency control unit 8 in the present example determines whether or not the position and a ratio of the virtual object Vo in the field of view satisfy a predetermined condition, and in a case where it is determined that the predetermined condition is not satisfied, the transparency control unit 8 performs control so that the real object Ro becomes opaque without performing scene determination.

Here, even if the real object Ro exists in front of the virtual object Vo, in a case where the virtual object Vo is small or located at an end in the field of view, there is a high possibility that the user does not pay attention to the virtual object Vo. Thus, in such a case, if the real object Ro is made transparent, there is a possibility that the user may feel a sense of discomfort. Thus, as described above, it is determined whether or not the position and the ratio of the virtual object Vo in the field of view satisfy the predetermined condition, and in a case where it is determined that the predetermined condition is not satisfied, the real object Ro in front of the virtual object Vo is controlled to be opaque.

As a result, even in a case where the real object Ro exists in front of the virtual object Vo, in a case where it is estimated that the user does not pay attention to the virtual object Vo, it is possible to make the real object Ro in front opaque without making the real object Ro transparent, and prevent the user from feeling a sense of discomfort as described above.

Specifically, as the determination as to whether or not the predetermined condition is satisfied, the transparency control unit 8 in the present example determines whether or not the ratio of the virtual object Vo (virtual object image) in the field of view (range of the captured image in the present example in a case where the VST scheme is adopted) is equal to or greater than a predetermined threshold THr, and the position of the virtual object Vo in the field of view is within a predetermined region Ar including the center of the field of view.

Note that the threshold THr and a size of the predetermined region Ar may be variably set according to user operation, a type of AR content, or the like.

[1-3. Processing procedure]

Fig. 3 is a flowchart indicating a specific processing procedure example for implementing the transparency control method as the first embodiment described above.

Specifically, Fig. 3 indicates a specific processing procedure example to be executed by the transparency control unit 8.

First, in step S101, the transparency control unit 8 determines whether or not a virtual object for which the position and the ratio in the field of view satisfy the predetermined condition exists. Specifically, on the basis of the drawing result of the virtual object Vo input from the virtual object drawing unit 7, it is determined whether or not the virtual object Vo that satisfies the condition exists, the condition being a condition that the ratio of the virtual object Vo in the field of view is equal to or greater than the predetermined threshold THr and the position in the field of view is within the predetermined region Ar.

In a case where it is determined in step S101 that the virtual object Vo satisfying the predetermined condition does not exist, the processing proceeds to step S106, and the transparency control unit 8 determines whether or not to end the processing. In other words, it is determined whether or not a predetermined processing end condition defined in advance as a condition for ending the processing indicated in Fig. 3, such as an instruction to stop the processing from the outside, is satisfied.

In a case where it is determined that the processing end condition is not satisfied and determined not to end the processing, the processing of the transparency control unit 8 returns to step S101.

Here, a loop from step S106 to step S101 is performed in a frame cycle.

As described above, in a case where it is determined in step S101 that the virtual object Vo satisfying the predetermined condition does not exist, the transparency control unit 8 does not output the opacity to the synthesis unit 9. Thus, in a case where the virtual object Vo satisfying the predetermined condition in step S101 does not exist, even if the real object Ro exists in front of the virtual object Vo, the real object Ro is not made transparent and becomes opaque. In other words, even in a case where the real object Ro exists in front of the virtual object Vo, in a case where it is estimated that the user does not pay attention to the virtual object Vo, the real object Ro in front is not made transparent and becomes opaque.

In a case where it is estimated in step S101 that the virtual object Vo satisfying the predetermined condition exists, the processing proceeds to step S102, and the transparency control unit 8 determines whether or not the real object Ro exists in front of the virtual object Vo. In other words, it is determined whether or not the real object Ro exists in front of the virtual object Vo satisfying the predetermined condition in step S101.

In a case where it is determined in step S102 that the real object Ro does not exist in front of the virtual object Vo, the processing of the transparency control unit 8 proceeds to step S106.

As described above, the synthesis unit 9 performs synthesis processing so as to leave the pixels on the front side, and thus, in this case, the real object Ro is not made transparent and is displayed in a completely opaque manner.

On the other hand, in a case where it is determined in step S102 that the real object Ro exists in front of the virtual object Vo, the processing proceeds to step S103, and the transparency control unit 8 determines whether or not the moving speed of the user is equal to or higher than the threshold. In other words, it is determined whether or not the above-described moving speed S is equal to or higher than the predetermined threshold.

In a case where it is determined in step S103 that the moving speed of the user is equal to or higher than the threshold, the processing proceeds to step S104, the transparency control unit 8 outputs 1 as the opacity of the real object Ro, and the processing proceeds to step S106.

As a result, even in a case where the real object Ro exists in front of the virtual object Vo, in a case where the moving speed of the user is equal to or higher than the threshold, that is, in a case where it is estimated that there is a risk of collision between the user and the real object Ro, the real object Ro is not made transparent and becomes opaque.

On the other hand, in a case where it is determined in step S103 that the moving speed of the user is equal to or higher than the threshold, the processing proceeds to step S105, and the transparency control unit 8 performs processing of determining and outputting the opacity of the real object Ro according to the distance D between the user position and the real object Ro.

Specifically, in the present example, the opacity of the real object Ro is determined using the first threshold THd1 and the second threshold THd2 as described above, and the determined opacity is output to the synthesis unit 9.

By this means, the transparency control of the real object Ro according to the distance D as described above is implemented. Specifically, in a region where the distance D exceeds the first threshold THd1 (in a case where it is estimated that there is no risk of collision), the opacity becomes 0 and the real object Ro is in a completely transparent state, and in a region where the distance D is equal to or less than the first threshold THd1, the opacity becomes larger than 0 and the transparency of the real object Ro is decreased. Then, in a region where the distance D is equal to or less than the first threshold THd1 and exceeds the second threshold THd2, the opacity increases as the distance D decreases and the transparency of the real object Ro is gradually decreased, and when the distance D becomes equal to or less than the second threshold THd2, the opacity becomes 1 and the real object Ro is in a completely opaque state.

The processing of the transparency control unit 8 proceeds to step S106 in response to execution of the processing of step S105.

In a case where it is determined in step S106 to end the processing, the transparency control unit 8 ends a series of the processing indicated in Fig. 3.

Note that, while an example has been described above where it is determined whether or not there is a risk of collision on the basis of both the distance D and the moving speed S, it is also conceivable to determine whether or not there is a risk of collision on the basis of only one of the distance D and the moving speed S.

In this event, in a case where the scene determination based only on the distance D between the distance D and the moving speed S is performed, it is conceivable to determine whether or not the moving speed S is equal to or higher than the threshold regardless of the determination result of whether or not the real object Ro exists in front of the virtual object Vo, and to set the opacity of the real object Ro to a value less than 1 (for example, 0, or the like) if the moving speed S is equal to or higher than the threshold.

Further, conversely, in a case where the scene determination based only on the moving speed S between the distance D and the moving speed S is performed, it is conceivable to determine whether or not the distance D is equal to or less than the threshold regardless of the determination result of whether or not the real object Ro exists in front of the virtual object Vo, and to set the opacity of the real object Ro to a value less than 1 (for example, 0, or the like) if the distance D is equal to or less than the threshold.

In addition, regarding the moving speed, an example has been described where only the moving speed of the user is used, but not only the moving speed of the user but also the moving speed on the real object Ro side may be used. In this event, it is also conceivable to use a relative speed between the user and the real object Ro. In addition, a direction of movement may be taken into account. For example, it is conceivable to take into account whether or not the user and the real object Ro move in a direction of approaching each other.

[1-4. Another example of first embodiment]

The example in which the transparency control method as the embodiment is applied in a case where the user feels the AR space using the VST scheme has been described, but the transparency control method as the embodiment can also be applied in a case where the user feels the AR space using the OST scheme.

In the OST scheme, the real object Ro is not shown to the user by the captured image as in the VST scheme, but the real object Ro is directly shown to the user without the captured image. Thus, in controlling of the transparency of the real object Ro, a dimming unit 16 is provided together with the display unit 11 to be used to display the virtual object Vo as illustrated in Fig. 4.

The dimming unit 16 includes, for example, a liquid crystal panel, or the like, and performs dimming of light emitted from an object in the real world and guided to the eyes of the user. Specifically, the dimming unit 16 is configured to be able to perform so-called segmented dimming in which dimming is performed for each of regions obtained by dividing the field of view of the user, and perform dimming only for a predetermined real object Ro.

Fig. 5 is a block diagram illustrating a configuration example of an information processing apparatus 1A as another example of the first embodiment supporting the OST scheme.

Note that, in the description below, portions similar to the portions already described will be denoted by the same reference signs as above, and explanation thereof will be omitted.

The information processing apparatus 1A is different from the information processing apparatus 1 in that a calculation unit 15A is provided instead of the calculation unit 15 and the dimming unit 16 is added.

The calculation unit 15A is different from the calculation unit 15 in that a synthesis unit 9A is provided instead of the synthesis unit 9. The synthesis unit 9A is different from the synthesis unit 9 in that a function of performing alpha blending between the pixels of the real object Ro and the pixels of the virtual object image according to the opacity instructed from the transparency control unit 8 is omitted.

In this case, the transparency control unit 8 performs processing similar to that indicated in Fig. 3, but is different from the case of the information processing apparatus 1 in that an output destination of the opacity in steps S104 and S105 is the dimming unit 16.

In this case, the dimming unit 16 minimizes a dimming amount for a pixel having the opacity of 1, and increases a dimming amount for a pixel having the opacity of less than 1 as the opacity approaches 0.

In a case where the OST scheme is adopted, the information processing apparatus 1A as described above can implement the transparency control method as the first embodiment.

Here, also in the second to fourth embodiments described below, by adopting the configuration for controlling the dimming unit 16 in a similar manner described above, the transparency of the real object Ro can be appropriately controlled so as to correspond to a case where the OST scheme is adopted.

Here, in the first embodiment, flow of the processing of controlling the transparency according to the distance D in a case where the moving speed S is equal to or less than the threshold is adopted, but conversely, it is also conceivable to adopt flow of the processing of controlling the transparency according to the moving speed S in a case where the distance D is equal to or greater than the threshold. In this event, in a similar manner to the case of the distance D, a region in which the transparency gradually changes according to the moving speed S may be provided.

Furthermore, in the above description, the configuration in which there is only one display unit 11 for displaying the AR space image to the user has been exemplified, but it is also conceivable to provide the display unit 11 for the right eye and the display unit 11 for the left eye of the user. In that case, the transparency control as the embodiment only requires to be performed for each of the right eye and the left eye.

Note that this point applies to each embodiment described below in a similar manner.

<2. Second embodiment>

Next, a second embodiment will be described.

In the second embodiment and a third embodiment, it is determined whether or not the user has performed predetermined action on the virtual object Vo as the scene determination.

In the second embodiment, transparency of the real object Ro as a gripping object is controlled in a case where the virtual object Vo that is an object to be gripped assumed to be gripped by the user is assumed as the virtual object Vo and the gripping object to be used for gripping the object to be gripped in a pseudo manner is assumed as the real object Ro.

Here, in the AR space, the following two patterns are roughly assumed as a method for causing the user to grip the virtual object Vo that is the object to be gripped in a pseudo manner.

The first pattern is a method in which the virtual object Vo that is the object to be gripped is superimposed on the real object Ro, and the user actually grips the real object Ro on which the virtual object to be gripped is superimposed as described above, thereby making it appear as if the user gripped the object to be gripped.

The second pattern is a method of, by displaying the virtual object Vo as the object to be gripped in advance, making it appear as if the user gripped the object to be gripped in a case where the user performs predetermined gesture using the hand in the vicinity of the virtual object Vo, or in a case where the user performs predetermined operation using an operation device in a state where the user grips the operation device for playing the AR content.

Here, assuming that an object to be used for gripping the object to be gripped in a pseudo manner is a "gripping object", the gripping object corresponds to the hand of the user in the case of the first pattern, and the gripping object corresponds to the operation device in the case of the second pattern.

In the second embodiment, in a case where the real object Ro that is the gripping object exists in front of the virtual object Vo that is the object to be gripped, it is determined whether or not the user has gripped the object to be gripped in a pseudo manner as the scene determination, and in a case where it is determined that the user has gripped the object to be gripped in a pseudo manner, control is performed to increase the transparency of the gripping object.

Fig. 6 is an explanatory diagram of a transparency control method as the second embodiment.

Fig. 6A illustrates a scene in which the user tries to grip the virtual object Vo that is the object to be gripped in a pseudo manner with the gripping object that is the hand in a case where the first pattern described above is adopted.

In a case where the user tries to grip the object to be gripped in a pseudo manner, the real object Ro (gripping object: the hand in this case) exists in front of the virtual object Vo (object to be gripped). In this event, if the transparency of the real object Ro is increased due to the real object Ro existing in front of the virtual object Vo as in Patent Document 1, it becomes difficult for the user to grasp a sense of distance to the virtual object Vo that is the object to be gripped, and there is a possibility that the user cannot grip the object to be gripped as intended.

Thus, in the second embodiment, in a case where it is determined that the user has gripped the object to be gripped in a pseudo manner as described above, control is performed to increase the transparency of the gripping object (see Fig. 6B).

In other words, in a situation where the real object Ro that is the gripping object exists in front of the virtual object Vo that is the object to be gripped, the transparency of the real object Ro that is the gripping object is not increased and is in an opaque state until it is determined that the user has gripped the object to be gripped in a pseudo manner.

This can make it easier for the user to grasp a sense of distance to the virtual object Vo that is the object to be gripped, so that it is possible to prevent a situation where it is difficult to grip the object to be gripped in a pseudo manner.

In addition, the transparency of the gripping object is increased as a result of it being determined that the object to be gripped has been gripped in a pseudo manner, so that the user can see through the virtual object Vo (object to be gripped) covered with the gripping object. For example, in a case where the object to be gripped has description information such as characters and marks, the user can visually recognize the description information.

Thus, according to the transparency control method as the second embodiment, it is possible to make it easier for the user to grip the object to be gripped in a pseudo manner and improve visibility of the virtual object Vo.

Fig. 7 is a block diagram illustrating a configuration example of an information processing apparatus 1B corresponding to a case where the first pattern described above is adopted in the second embodiment.

A difference from the information processing apparatus 1 illustrated in Fig. 3 is that a calculation unit 15B is provided instead of the calculation unit 15. The calculation unit 15A is different from the calculation unit 15 in that an object recognition unit 17 is added and a transparency control unit 8B is provided instead of the transparency control unit 8.

The object recognition unit 17 recognizes the real object Ro (hereinafter, referred to as a "real object on which a virtual object is to be superimposed") as a target on which the object to be gripped is to be superimposed, and recognizes the gripping object (the hand of the user in the present example).

Specifically, the object recognition unit 17 in the present example performs object recognition processing on the basis of the captured image by the image sensor 3 and the distance image obtained by the distance image generation unit 6.

In the object recognition processing here, processing of specifying a three-dimensional position and a posture of the recognized object in the world coordinate system is also performed.

Note that the object recognition processing can be implemented by using, for example, object recognition artificial intelligence (AI) such as CNN that is machine-learned on the basis of the captured image by the image sensor.

In this case, the virtual object drawing unit 7 performs processing of drawing the virtual object Vo that is the object to be gripped on the basis of the information regarding the position and the posture of the real object Ro that is the real object on which the virtual object is to be superimposed, recognized by the object recognition unit 17. Specifically, the object to be gripped is drawn such that the object to be gripped is superimposed on the real object on which the virtual object is to be superimposed. In this case, output information of the virtual object drawing unit 7 includes information regarding the position and the posture of the virtual object Vo that is the object to be gripped.

The transparency control unit 8B performs the transparency control as the second embodiment described above, that is, in a case where the real object Ro that is the gripping object exists in front of the virtual object Vo that is the object to be gripped, determines whether or not the user has gripped the object to be gripped in a pseudo manner as the scene determination, and performs control to increase the transparency of the gripping object in a case where it is determined that the user has gripped the object to be gripped in a pseudo manner.

Specifically, the transparency control unit 8B in the present example performs determination based on the distance between the hand of the user and the object to be gripped, recognized by the object recognition unit 17 and an amount of movement of the object to be gripped as determination as to whether or not the user has gripped the object to be gripped in a pseudo manner. More specifically, it is determined whether or not the distance between the hand of the user and the object to be gripped is equal to or less than a certain value and the amount of movement of the object to be gripped is equal to or greater than a certain value as determination as to whether or not the user has gripped the object to be gripped in a pseudo manner.

In a case where the first pattern is adopted, when the user grips the object to be gripped in a pseudo manner, the user performs action of actually gripping the real object on which the virtual object is superimposed after bringing the hand close to the object to be gripped (real object on which the virtual object is superimposed). After the object to be gripped has been gripped in a pseudo manner, the object to be gripped is moved by the user lifting the object to be gripped (real object on which the virtual object is superimposed), or the like.

Thus, by making determination based on the distance between the hand of the user and the object to be gripped and the amount of movement of the object to be gripped as described above, it is possible to appropriately determine whether or not the object to be gripped has been gripped in a pseudo manner.

Fig. 8 is a flowchart indicating a specific processing procedure example for implementing the transparency control method corresponding to a case where the first pattern described above is adopted.

In Fig. 8, in step S201, the transparency control unit 8B determines whether or not the hand and the object to be gripped are being detected in the field of view. This determination can be made, for example, on the basis of the result of recognition of the hand of the user by the object recognition unit 17 and the information regarding the position of the virtual object Vo that is the object to be gripped output by the virtual object drawing unit 7.

In a case where it is determined in step S201 that the hand and the object to be gripped are not being detected in the field of view, the processing proceeds to step S205, and the transparency control unit 8B determines whether or not to end the processing. The processing of step S205 is processing of determining whether or not a predetermined processing end condition is satisfied, similarly to the processing of step S106 described above.

In a case where the transparency control unit 8B determines not to end the processing in step S205, the processing returns to step S201. Also in this case, a loop in a case where it is determined not to end the processing is performed in a frame cycle.

On the other hand, in a case where it is determined in step S201 that the hand and the object to be gripped are being detected in the field of view, the processing proceeds to step S202, and the transparency control unit 8B determines whether or not the distance between the hand and the object to be gripped is equal to or less than a certain value.

In a case where it is determined in step S202 that the distance between the hand and the object to be gripped is not equal to or less than the certain value, the processing of the transparency control unit 8B proceeds to step S205.

As a result, in a state where the distance between the hand and the object to be gripped is not equal to or less than a certain value, the opacity of the real object Ro is not output to the synthesis unit 9. Thus, if the hand exists in front of the virtual object Vo that is the object to be gripped, the hand is displayed in a completely opaque state.

On the other hand, in a case where it is determined in step S202 that the distance between the hand and the object to be gripped is equal to or less than the certain value, the processing proceeds to step S203, and the transparency control unit 8B determines whether or not the amount of movement of the object to be gripped is equal to or greater than the certain value.

In a case where it is determined in step S203 that the amount of movement of the object to be gripped is not equal to or greater than the certain value, the processing of the transparency control unit 8B proceeds to step S205.

As a result, in a case where it is estimated that the user does not grip the object to be gripped in a pseudo manner, the opacity of the real object Ro is not output to the synthesis unit 9. Thus, if the hand exists in front of the virtual object Vo that is the object to be gripped, the hand is displayed in a completely opaque state.

In a case where it is determined in step S203 that the amount of movement of the object to be gripped is equal to or greater than the certain value, the processing proceeds to step S204, the transparency control unit 8B performs processing of outputting a predetermined value less than 1 as the opacity of the hand, and the processing proceeds to step S205.

As a result, it is possible to decrease the transparency of the hand so as to correspond to a case where it is estimated that the user has gripped the object to be gripped in a pseudo manner.

Note that the numerical value to be output as the opacity of the hand in step S204 is not particularly limited, but for example, 0 (completely transparent) may be output to enhance the effect of improving the visibility of the object to be gripped.

In a case where it is determined in step S205 to end the processing, the transparency control unit 8B ends a series of the processing indicated in Fig. 8.

Note that in a case where the first pattern is adopted, the distance between the hand and the object to be gripped can also be obtained as the distance between the hand and the real object on which the virtual object is superimposed.

Next, a case where the above-described second pattern is adopted will be described.

Fig. 9 is a block diagram illustrating a configuration example of an information processing apparatus 1C corresponding to a case where the second pattern is adopted.

A difference from the information processing apparatus 1B illustrated in Fig. 7 is that a calculation unit 15C is provided instead of the calculation unit 15B. The calculation unit 15C is different from the calculation unit 15B in that a transparency control unit 8C is provided instead of the transparency control unit 8B.

Note that the object recognition function for the real object on which the virtual object is to be superimposed is not required for the object recognition unit 17 in the calculation unit 15C.

In addition, the virtual object drawing unit 7 in this case does not need to have the function of drawing the virtual object Vo that is the object to be gripped so as to be superimposed on the real object Ro as the real object on which the virtual object is to be superimposed. In a case where operation of gripping the virtual object Vo that is the object to be gripped in a pseudo manner is not performed, the virtual object Vo that is the object to be gripped is drawn as the virtual object Vo existing at a predetermined position in the AR space. In a case where the operation of gripping the virtual object Vo in a pseudo manner is performed, the virtual object drawing unit 7 draws the virtual object Vo as the virtual object Vo existing at a position having a predetermined positional relationship with the position of the gripping object (the hand of the user in the present example).

Also in this case, the output information of the virtual object drawing unit 7 includes information regarding the position and the posture of the virtual object Vo that is the object to be gripped.

The transparency control unit 8C controls the transparency of the gripping object (the hand of the user in the present example) corresponding to the case where the second pattern is adopted.

Specifically, the transparency control unit 8C in the present example performs determination based on gesture operation using the hand, as determination as to whether or not the user has gripped the object to be gripped in a pseudo manner. More specifically, determination as to whether or not predetermined gesture operation using the hand has been performed is made as determination as to whether or not the user has gripped the object to be gripped in a pseudo manner.

Also in this case, in a case where it is determined that the user has gripped the object to be gripped in a pseudo manner, control is performed to decrease the transparency of the hand of the user as the gripping object.

Fig. 10 is a flowchart indicating a specific processing procedure example for implementing the transparency control method corresponding to a case where the above-described second pattern is adopted.

In step S301, the transparency control unit 8C determines whether or not the hand and the virtual object Vo that is the object to be gripped are being detected in the field of view. This determination can be performed, for example, on the basis of the object recognition result of the hand by the object recognition unit 17 and the information regarding the position of the virtual object Vo that is the object to be gripped output by the virtual object drawing unit 7.

In a case where it is determined in step S301 that the hand and the virtual object Vo that is the object to be gripped are not being detected in the field of view, the processing proceeds to step S304, and the transparency control unit 8C determines whether or not to end the processing. The processing of step S304 is processing of determining whether or not a predetermined processing end condition is satisfied, similarly to the processing of steps S106 and S205 described above.

In a case where the transparency control unit 8C determines not to end the processing in step S304, the processing returns to step S301. Also in this case, a loop in a case where it is determined not to end the processing is performed in a frame cycle.

On the other hand, in a case where it is determined in step S301 that the hand and the virtual object Vo that is the object to be gripped are being detected in the field of view, the processing proceeds to step S302, and the transparency control unit 8C determines whether or not pinch gesture of the hand has been detected.

Note that setting the pinch gesture as a detection target is merely an example, and it is of course conceivable to assign another gesture using the hand as pseudo gripping operation when the second pattern is adopted.

The gesture detection (gesture recognition) here can be implemented by using, for example, recognition AI such as a CNN that is machine-learned on the basis of the captured image by the image sensor.

In a case where it is determined in step S302 that the pinch gesture of the hand is not detected, the processing of the transparency control unit 8C proceeds to step S304.

As a result, in a state in which it is estimated that operation of gripping the object to be gripped in a pseudo manner is not performed, the opacity of the real object Ro is not output to the synthesis unit 9. Thus, if the hand exists in front of the virtual object Vo that is the object to be gripped, the hand is displayed in a completely opaque state.

On the other hand, in a case where it is determined in step S302 that the pinch gesture of the hand is detected, the processing proceeds to step S303, the transparency control unit 8C performs processing of outputting a predetermined value less than 1 as the opacity of the hand, and the processing proceeds to step S304.

As a result, it is possible to decrease the transparency of the hand so as to correspond to a case where it is estimated that the user has gripped the object to be gripped in a pseudo manner.

Note that the numerical value to be output as the opacity of the hand in step S303 is not particularly limited, but also in this case, for example, 0 (completely transparent) may be output to enhance the effect of improving the visibility of the object to be gripped.

In a case where it is determined in step S304 to end the processing, the transparency control unit 8C ends a series of the processing indicated in Fig. 10.

Note that as described above, in a case where the second pattern is adopted, operation using the operation device may be assigned to operation of gripping the object to be gripped in a pseudo manner.

In this case, the transparency control unit 8C may determine whether or not the user has gripped the object to be gripped in a pseudo manner on the basis of the operation using the operation device.

In addition, in a case where the operation using the operation device is assigned to the operation of gripping the object to be gripped in a pseudo manner as described above, it is also conceivable to perform control to increase the transparency of the real object Ro that is the operation device in a case where it is determined that the operation of gripping the object to be gripped in a pseudo manner has been performed.

## <3. Third embodiment>

The third embodiment achieves both improvement in easiness of grasping a sense of distance to the virtual object Vo and improvement in visibility of the virtual object Vo, for example, in a case where the virtual object Vo is used as an operation button, or the like, and the user operates the operation button in a scene where the user tries to touch the virtual object Vo with the fingertip.

Specifically, in the third embodiment, in a case where the real object Ro that is the hand of the user exists in front of the virtual object Vo, as the scene determination, determination is performed based on a determination result as to whether or not the fingertip of the user and the line-of-sight of the user overlap, and in a case where it is determined that the fingertip and the line-of-sight overlap, control is performed to decrease the transparency of the real object Ro that is the hand.

Fig. 11 is an explanatory diagram of the transparency control method as the third embodiment.

For example, as illustrated in Fig. 11A, even in a case where some kind of operation button is assumed as the virtual object Vo and a scene is assumed where the operation button is to be operated by the hand of the user as the real object Ro, the real object Ro exists between the user and the virtual object Vo. However, even in this case, if the transparency of the hand is increased as the real object Ro only in response to the real object Ro existing in front of the virtual object Vo, it is difficult for the user to grasp a positional relationship between the button to be operated and the hand, and there is a possibility that the user cannot perform the button operation as intended.

Thus, in the third embodiment, as the scene determination, it is determined whether or not the fingertip of the user and the line-of-sight of the user overlap as described above.

In a case where the user tries to touch the virtual object Vo with the fingertip, for example, when the user performs button operation, the user normally brings the hand in a pointing state close to the virtual object Vo while gazing at the target virtual object Vo, and in a case where the user touches the virtual object Vo, the fingertip of the user and the line-of-sight of the user overlap with each other.

Thus, according to the scene determination described above, it is possible to appropriately determine whether or not the user has touched the virtual object Vo with the fingertip (whether or not the user has operated the operation button).

Furthermore, in a case where the fingertip of the user and the line-of-sight of the user overlap in a situation where the user tries to touch the virtual object Vo with the fingertip as described above, the line-of-sight of the user also overlaps with the virtual object Vo. Thus, the scene determination described above also serves as determination as to whether or not the user wants to visually recognize information drawn on the virtual object Vo such as a button.

In the third embodiment, in a case where it is determined that the fingertip of the user and the line-of-sight of the user overlap as a result of the scene determination, control is performed to decrease the transparency of the real object Ro that is the hand of the user (see Fig. 11B).

In other words, in a situation where the real object Ro that is the hand of the user exists in front of the virtual object Vo, the transparency of the real object Ro that is the hand of the user is not increased and is in an opaque state until it is estimated that the user has touched the virtual object Vo with the fingertip.

This makes it possible for the user to easily grasp a sense of distance to the virtual object Vo in a situation where the user tries to touch the virtual object Vo with the fingertip, such as when the user tries to operate the operation button that is the virtual object Vo.

Furthermore, in a case where it is estimated that the user has touched the virtual object Vo with the fingertip, the transparency of the hand of the user is increased, so that the user can see through the virtual object Vo covered with the fingertip of the user. For example, in a case where the virtual object Vo has description information such as characters and marks, the user can visually recognize the description information.

Thus, according to the transparency control method as the third embodiment, it is possible to achieve both improvement in easiness of grasping a sense of distance to the virtual object Vo and improvement in visibility of the virtual object Vo.

Fig. 12 is a block diagram illustrating a configuration example of an information processing apparatus 1D as the third embodiment.

A difference from the information processing apparatus 1C illustrated in Fig. 9 is that a line-of-sight estimation unit 18 is added and a calculation unit 15D is provided instead of the calculation unit 15C.

The line-of-sight estimation unit 18 detects a line-of-sight direction of the user.

Although various configurations are conceivable for implementing estimation of the line-of-sight direction of the user, the line-of-sight estimation unit 18 in the present example includes a camera (inner camera) provided to capture an image of the eyes of the user, and estimates the line-of-sight direction of the user by image analysis of the captured image by the camera.

In this case, the line-of-sight estimation unit 18 first estimates the line-of-sight direction of the user in the camera coordinate system, and converts the line-of-sight direction of the user in the camera coordinate system into direction information in the world coordinate system on the basis of arrangement position information of the inner camera, and the like.

The calculation unit 15D is different from the calculation unit 15C in that a transparency control unit 8D is provided instead of the transparency control unit 8C.

In addition, the virtual object drawing unit 7 in the calculation unit 15D draws the virtual object Vo in accordance with drawing instruction information from the outside, similarly to the virtual object drawing unit 7 in the information processing apparatus 1.

The transparency control unit 8D performs transparency control as the third embodiment described above, that is, in a case where the real object Ro that is the hand of the user exists in front of the virtual object Vo, as the scene determination, determination based on the determination result as to whether or not the fingertip of the user and the line-of-sight of the user overlap, and in a case where it is determined that the fingertip and the line-of-sight overlap, the transparency control unit 8D performs control to decrease the transparency of the real object Ro that is the hand.

Specifically, as the scene determination, the transparency control unit 8D in the present example performs determination based on the determination result as to whether the fingertip of the user and the line-of-sight of the user overlap and the determination result as to whether the hand of the user is in a pointing state.

Fig. 13 is a flowchart indicating a specific processing procedure example for implementing the transparency control method as the third embodiment described above.

In Fig. 13, in step S401, the transparency control unit 8D determines whether or not the user is looking at the virtual object Vo. This determination can be made on the basis of the information regarding the line-of-sight direction of the user estimated by the line-of-sight estimation unit 18 and the output information of the virtual object drawing unit 7. Specifically, this determination can be performed as determination whether or not the line-of-sight direction overlaps with the virtual object Vo.

In a case where it is determined in step S401 that the user is not looking at the virtual object Vo, the processing proceeds to step S406, and the transparency control unit 8D determines whether or not to end the processing. The processing of step S406 is processing of determining whether or not a predetermined processing end condition is satisfied, similarly to the processing of steps S106 and S205 described above.

In a case where the transparency control unit 8D determines not to end the processing in step S406, the processing returns to step S401 (also in this case, a loop in a case where it is determined not to end the processing is performed in a frame cycle).

On the other hand, in a case where it is determined in step S401 that the user is looking at the virtual object Vo, the processing proceeds to step S402, and the transparency control unit 8D determines whether or not the hand exists in front of the virtual object Vo looked at by the user. This determination can be made on the basis of the recognition result information of the hand of the user by the object recognition unit 17 and the output information of the virtual object drawing unit 7.

In a case where it is determined in step S402 that the hand does not exist in front of the virtual object Vo looked at by the user, the processing of the transparency control unit 8D proceeds to step S406.

As a result, in a case where the hand does not exist in front of the virtual object Vo looked at by the user, the opacity is not output to the synthesis unit 9, and the hand is displayed in a completely opaque state.

On the other hand, in a case where it is determined in step S402 that the hand exists in front of the virtual object Vo looked at by the user, the processing proceeds to step S403, and the transparency control unit 8D determines whether or not pointing gesture has been detected. Note that, in a similar manner to the case of the information processing apparatus 1C, it is conceivable to use AI for gesture detection (recognition) of the hand.

In a case where it is determined in step S403 that the pointing gesture is not detected, the processing of the transparency control unit 8D proceeds to step S406. In other words, also in this case, the hand is displayed in a completely opaque state.

On the other hand, in a case where it is determined in step S403 that the pointing gesture has been detected, the processing proceeds to step S404, and the transparency control unit 8D determines whether or not the line-of-sight overlaps with the fingertip.

In a case where it is determined in step S404 that the fingertip and the line-of-sight do not overlap, the processing of the transparency control unit 8D proceeds to step S406.

In other words, in a case where it is estimated that the user does not touch the virtual object Vo looked at by the user with the fingertip, the hand of the user is displayed in a completely opaque state.

In a case where it is determined in step S404 that the fingertip and the line-of-sight overlap, the processing proceeds to step S405, the transparency control unit 8D performs processing of outputting a predetermined value less than 1 as the opacity of the hand, and the processing proceeds to step S406.

By this means, it is possible to decrease the transparency of the hand of the user so as to correspond to a case where it is estimated that the user touches the virtual object Vo looked at by the user with the fingertip.

Note that the numerical value to be output as the opacity of the hand in step S405 is not particularly limited, but also in this case, for example, 0 (completely transparent) may be output to enhance the effect of improving the visibility of the object to be gripped.

In a case where it is determined in step S406 to end the processing, the transparency control unit 8D ends a series of the processing indicated in Fig. 13.

## <4. Fourth embodiment>

In the fourth embodiment, a countermeasure is taken in a case where there is a plurality of users sharing the AR space.

Fig. 14 is an explanatory diagram of an AR system assumed in the fourth embodiment.

Here, two users of a user A and a user B are assumed for the sake of description as a plurality of users sharing the AR space.

As illustrated in the drawing, it is assumed that the user A and the user B are located remotely, for example.

In the AR system in this case, an information processing apparatus 1E as the fourth embodiment is worn by the user A, and the display device 30 is worn by the user B. In the present example, an HMD is assumed as a device form of the display device 30, but the device form of the display device 30 is not limited thereto, and for example, it is also conceivable to adopt a device form as a mobile computer device such as a smartphone or a tablet terminal.

In the fourth embodiment, an AR space image generated by superimposing the virtual object Vo on the captured image from the viewpoint position of the user A (one user) is displayed to the user B (another user), so that the user A and the user B share the AR space.

In this case, the user B sees the same AR space as the AR space that the user A sees by displaying the AR space image based on the captured image from the viewpoint position of the user A generated in the information processing apparatus 1E by the display device 30.

In this event, an imaging range of the captured image to be used to generate the AR space image is the vicinity range of the information processing apparatus 1E, and thus, a region of the user B such as the hand or the foot of the user B is not displayed in the AR space image displayed for the user B.

Here, in a case where the AR space is shared by the user A and the user B by displaying the AR space image based on the captured image from the viewpoint position of the user A to the user B as described above, if the information processing apparatus 1E performs transparency control of the real object Ro with reference to the line-of-sight of the user A as the AR space image to be generated for the user B, there is a possibility that an AR space image for which the user B feels a sense of discomfort may be generated.

Specifically, in a case where at least a portion such as the hand of the user A exists in front of the virtual object Vo looked at by the user A, it is conceivable to perform control to increase the transparency of the portion as the transparency control of the real object Ro. However, the user B may not look at the virtual object Vo looked at by the user A. In this case, if the transparency of the portion of the user A is similarly increased also for the AR space image for the user B, for the user B, at least the portion of the user A is transparent although at least the portion of the user A does not exist in front of the virtual object Vo looked at by the user B, and as a result, there is a possibility that the user B may feel a sense of discomfort.

Thus, in the fourth embodiment, as will be described later, a line-of-sight estimation unit 34 that estimates a line-of-sight direction of the user B is provided in the display device 30, and in the generation of the AR space image to be displayed to the user B, the information processing apparatus 1E controls the transparency of the portion of the user A in the AR space image on the basis of the result of determination as to whether or not at least the portion of the user A exists between the viewpoint position of the user B and the virtual object Vo looked at by the user B. Specifically, unless it is determined that at least the portion of the user A exists between the viewpoint position of the user B and the virtual object Vo looked at by the user B, the transparency of the corresponding portion of the user A is not increased in the AR space image for the user B.

Fig. 15 is an explanatory diagram of transparency control as the fourth embodiment, and Fig. 15 A illustrates a state in which the real object Ro that is the hand of the user A is displayed in a display image (for the user B) for the user B.

In the fourth embodiment, in a case where it is determined that the hand of the user A does not exist in front of the virtual object Vo looked at by the user B in the state of Fig. 15A, the display state of Fig. 15A is maintained, that is, the hand of the user A is maintained in a completely opaque state.

On the other hand, in a case where it is determined that the hand of the user A exists in front of the virtual object Vo looked at by the user B, the transparency of the hand of the user A is increased as illustrated in Fig. 15B.

With such transparency control, it is possible to prevent at least the portion of the user A from being transparent in the display image for the user B even though at least the portion of the user A does not exist in front of the virtual object Vo looked at by the user B, so that it is possible to prevent the user B from feeling a sense of discomfort.

Fig. 16 is a block diagram illustrating a configuration example of the display device 30 in the fourth embodiment.

As illustrated, the display device 30 includes a reception unit 31, a display control unit 32, a display unit 33, the line-of-sight estimation unit 34, an IMU 35, an image sensor 36, a self-position/posture estimation unit 37, and a transmission unit 38.

The reception unit 31 receives the AR space image for the user B generated by the information processing apparatus 1E as described later.

The display control unit 32 displays the AR space image received by the reception unit 31 on the display unit 33 that has a display panel such as an LCD panel or an organic EL panel to display an image.

The line-of-sight estimation unit 34 estimates the line-of-sight direction of the user B. Note that the configuration of the line-of-sight estimation unit 34 may be similar to the configuration of the line-of-sight estimation unit 18 described above, for example, and thus, detailed description thereof will be omitted. As for the information regarding the line-of-sight direction,

the IMU 35 outputs triaxial acceleration information and triaxial angular velocity information similarly to the IMU 2 described above, and the image sensor 36 obtains a captured image obtained by imaging the outside world of the display device 30.

In the display device 30, the self-position/posture estimation unit 37 estimates a self-position and a posture of the display device 30 by performing self-position/posture estimation processing by, for example, SLAM similar to the self-position/posture estimation unit 5 described above on the basis of the acceleration information and the angular velocity information from the IMU 35 and the captured image by the image sensor 36.

The transmission unit 38 transmits the information regarding the line-of-sight direction of the user B estimated by the line-of-sight estimation unit 34 and the information regarding the self-position and the posture of the display device 30 estimated by the self-position/posture estimation unit 37 to the information processing apparatus 1E.

Here, it is assumed that the world coordinate system is shared between the information processing apparatus 1E and the display device 30 via a marker or a 3D map created in advance. Thus, the information regarding the line-of-sight direction of the user B and the information regarding the self-position and the posture of the display device 30 transmitted by the transmission unit 38 as described above are generated as the information regarding the line-of-sight direction and the self-position and the posture in the world coordinate system on the information processing apparatus 1E side.

Fig. 17 is a block diagram illustrating a configuration example of the information processing apparatus 1E as the fourth embodiment.

The information processing apparatus 1E is different from the information processing apparatus 1D illustrated in Fig. 12 in that a calculation unit 15E is provided instead of the calculation unit 15D, and a reception unit 19 and a transmission unit 21 are added.

The reception unit 19 receives the information regarding the line-of-sight direction of the user B and the information regarding the self-position and the posture of the display device 30 transmitted by the transmission unit 38 of the display device 30.

The calculation unit 15E is different from the calculation unit 15D in that a transparency control unit 8E is provided instead of the transparency control unit 8D and that a transmission image generation unit 20 is added.

In the calculation unit 15E, the transmission image generation unit 20 generates the AR space image for the user B on the basis of the captured image by the image sensor 3.

Furthermore, the transmission image generation unit 20 performs transparency control as the fourth embodiment described above for the AR space image for the user B on the basis of the information regarding the line-of-sight direction of the user B and the information regarding the self-position and the posture of the display device 30 received by the reception unit 19, the information regarding the result of the object recognition processing by the object recognition unit 17, and the output information of the virtual object drawing unit 7.

Specifically, the transmission image generation unit 20 determines whether or not at least a portion of the user A exists between the viewpoint position of the user B and the virtual object Vo looked at by the user B, and controls the transparency of the portion of the user A in the AR space image for the user B on the basis of a result of the determination. Specifically, unless it is determined that at least the portion of the user A exists between the viewpoint position of the user B and the virtual object Vo looked at by the user B, the transparency of the corresponding portion of the user A is not increased in the AR space image for the user B. In a case where it is determined that at least a portion of the user A exists between the user B and the virtual object Vo looked at by the user B, control is performed to increase the transparency of the corresponding portion of the user A.

Here, for the viewpoint position of the user B, in the present example, the information regarding the self-position of the display device 30 received by the reception unit 19 is used. Furthermore, the virtual object Vo looked at by the user B can be detected as the virtual object Vo existing on the line-of-sight of the user B.

The transmission unit 21 transmits the AR space image for the user B generated by the transmission image generation unit 20 to the display device 30.

The transparency control unit 8E performs transparency control similar to the transparency control as the fourth embodiment described above on the AR space image for the user A on the basis of the information regarding the line-of-sight direction of the user A estimated by the line-of-sight estimation unit 18, the information regarding the self-position and the posture estimated by the self-position/posture estimation unit 5, the information regarding the object recognition processing result by the object recognition unit 17, and the output information of the virtual object drawing unit 7.

Specifically, the transparency control unit 8E determines whether or not at least a portion of the user A exists between the viewpoint position of the user A and the virtual object Vo looked at by the user A, and controls the transparency of the portion of the user A in the AR space image for the user A (synthesized image obtained by the synthesis unit 9) on the basis of a result of the determination. Specifically, unless it is determined that at least a portion of the user A exists between the user A and the virtual object Vo looked at by the user A, the transparency of the corresponding portion of the user A is not increased in the AR space image for the user A. In a case where it is determined that at least a portion of the user A exists between the user A and the virtual object Vo looked at by the user A, control is performed to increase the transparency of the corresponding portion of the user A.

Fig. 18 is a flowchart indicating a specific processing procedure example for implementing a transparency control method as the fourth embodiment.

Here, a procedure example of processing to be performed by the transmission image generation unit 20 will be described. The processing to be performed by the transparency control unit 8E is similar to the processing indicated in Fig. 18 except that a reference user is not the user B but the user A, the opacity determined in step S504 is output to the synthesis unit 9, and the processing related to the synthesis of steps S505 to S507 is unnecessary, and thus, redundant description will be avoided.

In step S501, the transmission image generation unit 20 determines whether or not the user B is looking at the virtual object Vo. This determination can be made on the basis of the information regarding the line-of-sight direction of the user B received by the reception unit 31, the information regarding the self-position and the posture of the display device 30, and the output information of the virtual object drawing unit 7.

In a case where it is determined in step S501 that the user B is looking at the virtual object Vo, the processing proceeds to step S502, and the transmission image generation unit 20 determines whether or not the hand (hand of the user A) exists in front of the virtual object Vo looked at by the user B. This determination can be made on the basis of the information of the object recognition processing result by the object recognition unit 17 and the output information of the virtual object drawing unit 7.

In a case where it is determined in step S502 that the hand exists in front of the virtual object Vo looked at by the user B, the processing proceeds to step S503, and the transmission image generation unit 20 determines whether or not the hand exists on the line-of-sight of the user B. This determination can be made on the basis of the information regarding the line-of-sight direction of the user B received by the reception unit 19, the information regarding the self-position and the posture of the display device 30, and the information regarding the object recognition processing result by the object recognition unit 17.

In a case where it is determined in step S503 that the hand exists on the line-of-sight of the user B, the processing proceeds to step S504, and the transmission image generation unit 20 determines the opacity of the hand to be a predetermined value less than 1. In other words, the opacity of the hand of the user A determined to exist on the line-of-sight of the user B in step S503 is determined to be a predetermined value less than 1.

In response to the determination processing being performed in step S504, the processing proceeds to step S506, and the transmission image generation unit 20 performs processing of synthesizing the captured image and the virtual object Vo according to the determined opacity. The synthesis here is performed by a method similar to the synthesis in the synthesis unit 9.

Thus, in a case where the processing of step S504 is performed, on the condition that the hand of the user A exists in front of the virtual object Vo looked at by the user B and the hand exists on the line-of-sight of the user B, the transparency of the hand is increased in the AR space image for the user B.

In step S507 subsequent to step S506, the transmission image generation unit 20 performs processing of outputting the synthesized image to the transmission unit 21.

In step S508 subsequent to step S507, the transmission image generation unit 20 determines whether or not to end the processing. The processing of step S508 is processing of determining whether or not a predetermined processing end condition is satisfied, similarly to the processing of steps S106 and S205 described above.

In a case where the transmission image generation unit 20 determines not to end the processing in step S508, the processing returns to step S501 (also in this case, a loop in a case where it is determined not to end the processing is performed in a frame cycle).

Furthermore, in respective cases of a case where the transmission image generation unit 20 determines that the user B is not looking at the virtual object Vo in step S501 described above, a case where the transmission image generation unit determines that the hand does not exist in front of the virtual object Vo looked at by the user B in step S502 described above, and a case where the transmission image generation unit 20 determines that the hand does not exist on the line-of-sight of the user B in step S503 described above, the processing proceeds to step S505, and the opacity of the hand is determined to be 1. Note that, in step S505, in a case where the hand of the user A is not recognized in the captured image, the opacity of the hand is not determined.

Then, the processing proceeds to step S506 described above in response to the transmission image generation unit 20 executing the processing of step S505.

As a result, in a case where the hand of the user A is recognized in the captured image, in a case where the hand does not exist in front of the virtual object Vo looked at by the user B, or in a case where the hand does not exist on the line-of-sight of the user B even if the hand exists in front of the virtual object Vo looked at by the user B, the hand is displayed in a completely opaque state.

In a case where it is determined in step S508 to end the processing, the transmission image generation unit 20 ends a series of the processing indicated in Fig. 18.

Note that, in the fourth embodiment, it is also conceivable to set pointing gesture of the hand as in the third embodiment as a condition for decreasing the transparency of the hand of the user A.

Furthermore, in the above description, an example has been described in which the AR space image for the user B is an image from the same viewpoint as the AR space image for the user A. However, it is also conceivable that the AR space image for the user B is an image from the viewpoint position of the user B by performing, for example, two-dimensional homography transformation or three-dimensional transformation using depth information on the captured image from the image sensor 3 in the transmission image generation unit 20.

Furthermore, as the processing of the transparency control unit 8E, processing similar to the processing by the transparency control unit 8B described in the second embodiment or the processing by the transparency control unit 8D described in the third embodiment can be performed.

## <5. Fifth embodiment>

A fifth embodiment relates to a method for enhancing easiness for the user to interact with the real world in a case where the user feels a VR space (a space in which all visible things are virtual objects Vo).

In the case of the VR space in which the real object Ro is not displayed, a case is also assumed in which the user wants to temporarily interact with the real object Ro behind the virtual object Vo, for example, for eating or drinking, a telephone response, or the like. In the fifth embodiment, to address such a case, by decreasing the transparency of the virtual object Vo, the real object Ro behind the virtual object Vo is shown to the user.

Fig. 19 is an explanatory diagram of a transparency control method as the fifth embodiment.

In the fifth embodiment, as illustrated in Fig. 19A, for example, a specific virtual object Vo such as a virtual wall in a VR space is defined as a target virtual object Vo, and the transparency of at least a portion of the virtual object Vo is increased on condition that the user gazes at the target virtual object Vo. As a result, the real object Ro behind the virtual object Vo can be shown to the user, and the user can interact with the real object Ro (Fig. 19B).

Fig. 20 is a block diagram illustrating a configuration example of an information processing apparatus 1F as the fifth embodiment.

The information processing apparatus 1F is different from the information processing apparatus 1 illustrated in Fig. 1 in that a line-of-sight estimation unit 18 is added and a calculation unit 15F is provided instead of the calculation unit 15.

The calculation unit 15F is different from the calculation unit 15 in that a transparency control unit 8F is provided instead of the transparency control unit 8 and a synthesis unit 9F is provided instead of the synthesis unit 9.

The transparency control unit 8F performs processing for implementing transparency control of the virtual object Vo as the fifth embodiment described above. Specifically, on the basis of the information regarding the line-of-sight direction of the user estimated by the line-of-sight estimation unit 18, the information regarding the self-position and the posture estimated by the self-position/posture estimation unit 5, and the output information of the virtual object drawing unit 7, the transparency control unit 8F instructs the synthesis unit 9F to increase the transparency of at least a portion of a specific virtual object Vo (the target virtual object Vo described above) on condition that the user has gazed at the virtual object Vo. Specifically, as the opacity of the virtual object Vo, opacity of less than 1 (for example, 0) is output to the synthesis unit 9F.

The transparency control unit 8F in the present example further imposes the following condition as the condition for increasing the transparency of the target virtual object Vo.

In other words, a condition that the distance between a predetermined region in the target virtual object Vo and the user is equal to or less than a certain value is further imposed.

In the present example, the transparency of the predetermined region in the target virtual object Vo is increased in response to the user gazing at the predetermined region in a state where the user approaches the predetermined region in the target virtual object Vo within a predetermined distance.

Here, "gaze" means to look at a target for at least equal to or longer than a certain period of time.

The synthesis unit 9F basically outputs the virtual object image drawn by the virtual object drawing unit 7 in order to generate the image reproducing the VR space. However, in a case where the transparency control unit 8F gives an instruction of opacity of less than 1 for the specific virtual object Vo as described above, the synthesis unit 9F performs alpha blending according to the instructed opacity for pixels for which the opacity of less than 1 is instructed in the virtual object image of the virtual object Vo and corresponding pixels in the captured image input from the image sensor 3, that is, pixels overlapping with the pixels of the virtual object image for which the opacity of less than 1 is instructed, and outputs a synthesized image obtained by performing the alpha blending.

Here, the transparency control unit 8F in the present example also performs transparency control based on the distance between the user and the real object Ro. Specifically, the transparency control unit 8F of the present example performs control to increase the transparency of the entire virtual space in a case where the distance between the user and the real object Ro is equal to or less than a predetermined warning threshold.

This makes it possible to avoid collision between the user and the real object Ro.

Fig. 21 is a flowchart indicating a specific processing procedure example for implementing the transparency control method as the fifth embodiment described above.

In Fig. 21, in step S601, the transparency control unit 8F determines whether or not the distance between the user and the real object Ro is equal to or less than the warning threshold. This determination can be made at least on the basis of the distance image generated by the distance image generation unit 6.

In a case where it is determined in step S601 that the distance between the user and the real object Ro is equal to or less than the warning threshold, the processing proceeds to step S605, and the transparency control unit 8F performs processing of outputting a predetermined value less than 1 to the synthesis unit 9F as the opacity of the entire virtual space.

This makes it possible to avoid collision with the real object Ro described above.

The processing proceeds to step S606 in response to execution of the processing of step S605, and the transparency control unit 8F determines whether or not to end the processing. The processing of step S606 is processing of determining whether or not a predetermined processing end condition is satisfied, similarly to the processing of steps S106 and S205 described above.

In a case where the transparency control unit 8F determines not to end the processing in step S606, the processing returns to step S601 (also in this case, a loop in a case where it is determined not to end the processing is performed in a frame cycle).

In addition, in a case where it is determined in step S601 that the distance between the user and the real object Ro is not equal to or less than the warning threshold, the processing proceeds to step S602, and the transparency control unit 8F determines whether or not the distance between the predetermined region of the virtual object Vo (target virtual object Vo) and the user is equal to or less than a certain value.

In a case where it is determined in step S602 that the distance between the predetermined region of the virtual object Vo and the user is equal to or less than the certain value, the processing proceeds to step S603, and the transparency control unit 8F determines whether or not the user is gazing at the predetermined region.

In a case where it is determined in step S603 that the user is gazing at the predetermined region, the processing proceeds to step S604, and the transparency control unit 8F performs processing of outputting a predetermined value less than 1 as the opacity of the predetermined region to the synthesis unit 9F.

As a result, the transparency of the target virtual object Vo can be increased in response to a trigger condition being satisfied, and the user can interact with the real object Ro behind the target virtual object Vo.

The processing proceeds to step S606 in response to the transparency control unit 8F executing the processing of step S604.

In addition, the processing of the transparency control unit 8F proceeds to step S606 in each of a case where it is determined that the distance between the predetermined region of the virtual object Vo and the user is not equal to or less than the certain value in step S602 described above and a case where it is determined that the user is not gazing at the predetermined region in step S603 described above.

As a result, in a case where the trigger condition is not satisfied, control to increase the transparency of the target virtual object Vo is not performed.

The transparency control unit 8F ends a series of the processing indicated in Fig. 21 in a case where it is determined in step S606 to end the processing.

Note that in the fifth embodiment, the trigger condition of the control for increasing the transparency of the target virtual object Vo is not limited to the condition described above.

In the fifth embodiment, in a case where the real object exists behind the virtual object Vo as viewed from the viewpoint position of the user, the transparency control unit 8F may determine whether or not the user has performed predetermined action on the virtual object Vo, and may control the transparency of the virtual object Vo on the basis of a result of the determination.

## <6. Modifications>

Although various embodiments according to the present technology have been described above, the present technology is not limited to the specific examples described above, and configurations as various modifications can be adopted.

For example, in the above description, a case where the information processing apparatus as each embodiment adopts the apparatus form of the HMD has been exemplified. However, the information processing apparatus as an embodiment may adopt, for example, an apparatus form as a mobile computer apparatus such as a smartphone or a tablet terminal, and is not limited to the apparatus form of the HMD.

## <7. Program and recording medium>

Here, as an embodiment, a program for implementing the functions of the transparency control units 8, 8B, 8C, 8D described above with reference to Figs. 3, 8, 13, and the like, by, for example, a CPU, a digital signal processor (DSP), or the like, or a device including these is conceivable.

In other words, a program according to an embodiment is a program that can be read by a computer device, and causes the computer device to implement a function of performing scene determination regarding at least one of action of a user and a positional relationship between the user and a real object in a case where the real object exists between a viewpoint position and a virtual object, and controlling transparency of the real object on the basis of a result of the scene determination.

In addition, the recording medium as an embodiment is a recording medium in which the program as the embodiment is recorded.

With such a program and a recording medium, the function as the transparency control unit 8, and the like, described above can be implemented in a device as the information processing apparatus 1, and the like.

The program described above can be recorded in advance in a hard disc drive (HDD) as a recording medium built in a device such as a computer apparatus, a ROM in a microcomputer including a CPU, or the like.

Alternatively, the program may be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program can be installed from the removable recording medium into the personal computer, and the like, or can be downloaded from a download site through a network such as a local area network (LAN) or the Internet.

Furthermore, such a program is suitable for a wide range of provision of the transparency control method as an embodiment. For example, by downloading the program to a personal computer, a portable information processing apparatus, a mobile phone, a game device, a video device, a personal digital assistant (PDA), or the like, the personal computer, or the like, can be caused to function as an apparatus that implements the transparency control method of the present disclosure.

<8. Summary of embodiments>

As described above, the information processing apparatus (1, 1A, 1B, 1C, 1D, 1E) as an embodiment includes the transparency control unit (8, 8B, 8C, 8D) that performs scene determination related to at least one of action of a user or a positional relationship between the user and a real object in a case where the real object exists between a viewpoint position and a virtual object, and controls transparency of the real object on the basis of a result of the scene determination.

According to the above configuration, for example, the transparency of the real object existing in front of the virtual object is controlled on the basis of the result of the scene determination related to the action of the user such as a speed at which the user moves, whether or not the user tries to grip the virtual object in a pseudo manner, whether or not the user tries to operate the virtual object that is a button, or the like, or the result of the scene determination related to the positional relationship between the user and the real object such as whether or not a distance between the user and the real object is short.

Thus, for the real object existing in front of the virtual object, it is possible to prevent increase of the transparency of the real object in a case where a possibility that the real object collides with the user is high, prevent increase of the transparency of the real object that is the hand of the user in a case where the user tries to grip the virtual object that is the object to be gripped, prevent increase of the transparency of the hand in a case where the user tries to operate the operation button as the virtual object with the real object that is the hand of the user, so that it is possible to implement appropriate control in accordance with the scene for the transparency control of the real object in a case where the real object exists between the viewpoint position and the virtual object.

Furthermore, in the information processing apparatus (1, 1A) as an embodiment, the transparency control unit (8, 8A) determines, as the scene determination, whether or not there is a risk of collision between the user and the real object on the basis of at least one of the distance between the user and the real object or the moving speed of the user, and performs control to decrease the transparency of the real object in a case where it is determined that there is the risk.

As a result, even in a case where the real object exists in front of the virtual object, in a case where it is estimated that the real object and the user are highly likely to collide with each other, the transparency of the real object is decreased.

It is therefore possible to make it easy for the user to notice approach to the real object, and it is possible to prevent collision between the user and the real object, so that it is possible to improve safety.

Furthermore, in a case where the real object exists in front of the virtual object, in a case where it is estimated that a possibility of collision between the real object and the user is low, it is possible to make the real object transparent. In this case, it is possible to allow the user to visually recognize the virtual object existing behind the real object.

Thus, according to the above configuration, it is possible to achieve both improvement in visibility of the virtual object and improvement in safety.

Furthermore, in the information processing apparatus as an embodiment, the transparency control unit determines, as the scene determination, whether or not the distance is equal to or less than a threshold, and performs control to decrease the transparency of the real object in a case where the distance is equal to or less than the threshold.

By determining whether or not the distance between the user and the real object is equal to or less than the threshold as described above, it is possible to appropriately determine whether or not there is a risk of collision between the user and the real object.

Furthermore, in the information processing apparatus as an embodiment, a first threshold and a second threshold smaller than the first threshold are determined as the threshold for the distance, and the transparency control unit controls the transparency of the real object to be gradually decreased according to the distance in a case where the distance is equal to or less than the first threshold and exceeds the second threshold, and controls the transparency of the real object to be 0 in a case where the distance is equal to or less than the second threshold.

As a result, in a situation where the distance between the user and the real object becomes gradually shorter, the transparency of the real object gradually decreases according to the increase in risk of collision.

It is therefore possible to make it easier for the user to notice approach to the real object according to the increase in risk of collision, so that it is possible to improve safety.

Furthermore, in the information processing apparatus as an embodiment, the transparency control unit determines, as the scene determination, whether or not the moving speed is equal to or higher than a threshold, and performs control to decrease the transparency of the real object in a case where the moving speed is equal to or higher than the threshold.

By determining whether or not the moving speed of the user is equal to or higher than the threshold as described above, it is possible to appropriately determine whether or not there is a risk of collision between the user and the real object.

Furthermore, in the information processing apparatus as an embodiment, the transparency control unit performs scene determination on the basis of both the distance and the moving speed.

As a result, even if the distance between the user and the real object is not equal to or less than the threshold, if the moving speed of the user is equal to or higher than the threshold, it is possible to determine that there is a risk of collision, and conversely, even if the moving speed of the user is not equal to or higher than the threshold, if the distance to the real object is equal to or less than the threshold, it is possible to determine that there is a risk of collision.

It is therefore possible to improve accuracy of the risk determination, so that it is possible to further improve safety.

Furthermore, in the information processing apparatus as an embodiment, the transparency control unit determines whether or not the position and the ratio of the virtual object in the field of view satisfy a predetermined condition, and performs control such that the real object is opaque without performing scene determination in a case where it is determined that the predetermined condition is not satisfied.

Here, even if the real object exists in front of the virtual object, in a case where the virtual object is small or located at an end in the field of view, there is a high possibility that the user does not pay attention to the virtual object. Thus, in such a case, if the real object is made transparent, there is a possibility that the user feels a sense of discomfort. Thus, as described above, it is determined whether or not the position and the ratio of the virtual object in the field of view satisfy the predetermined condition, and in a case where it is determined that the predetermined condition is not satisfied, the real object in front of the virtual object is controlled to be opaque.

As a result, even in a case where the real object exists in front of the virtual object, in a case where it is estimated that the user does not pay attention to the virtual object, the real object in front of the virtual object can be made opaque without being made transparent, so that it is possible to prevent the user from feeling a sense of discomfort.

Furthermore, in the information processing apparatus (1B, 1C, 1D) as an embodiment, the transparency control unit (8B, 8C, 8D) determines, as the scene determination, whether or not the user has performed predetermined action on the virtual object.

As a result, the transparency of the real object is controlled so as to correspond to a case where the user performs predetermined action on the virtual object, such as a case where the user performs action of gripping the virtual object that is the object to be gripped in a pseudo manner or action of pointing a predetermined virtual object such as an operation button.

Thus, for the real object existing in front of the virtual object, it is possible to prevent increase of the transparency of the real object that is the hand of the user in a case where the user tries to grip the virtual object that is the object to be gripped, prevent increase of the transparency of the hand in a case where the user tries to operate the operation button as the virtual object with the real object that is the hand of the user, so that it is possible to implement appropriate control in accordance with the scenes for the transparency control of the real object in a case where the real object exists between the viewpoint position and the virtual object.

Specifically, in this case, it is possible to achieve both improvement in easiness of grasping a sense of distance to the virtual object and improvement in visibility of the virtual object.

Furthermore, in the information processing apparatus (1B, 1C) as an embodiment, the virtual object is a virtual object that is an object to be gripped assumed to be gripped by the user, the real object is a gripping object to be used for gripping the object to be gripped in a pseudo manner, and the transparency control unit (8B, 8C) determines, as scene determination, whether or not the user has gripped the object to be gripped in a pseudo manner, and performs control to increase the transparency of the gripping object in a case where it is determined that the user has gripped the object to be gripped in a pseudo manner.

As a result, in a case where the virtual object is a virtual object that is an object to be gripped assumed to be gripped by the user, it is possible to prevent the gripping object existing in front of the virtual object that is the object to be gripped from being made transparent until it is determined that the user has gripped the virtual object in a pseudo manner. It is therefore possible to make it easy for the user to grasp a sense of distance to the virtual object that is the object to be gripped, so that it is possible to prevent a situation where it is difficult to grip the object to be gripped in a pseudo manner.

In addition, the transparency of the gripping object is increased in response to the determination that the object to be gripped has been gripped in a pseudo manner, so that it is possible to allow the user to see through the virtual object covered with the gripping object. For example, in a case where the object to be gripped has description information such as characters and marks, the user can visually recognize the description information.

Thus, according to the above configuration, it is possible to achieve both improvement in easiness for the user to grip the object to be gripped in a pseudo manner and improvement in visibility of the virtual object.

Furthermore, in the information processing apparatus (1B) as an embodiment, the object to be gripped is a virtual object to be superimposed and displayed on a real object on which the virtual object is to be superimposed that is a predetermined real object, the gripping object is the hand of the user, and the transparency control unit (8B) determines whether or not the object to be gripped has been gripped in a pseudo manner on the basis of the distance between the hand and the object to be gripped and the amount of movement of the object to be gripped.

In a case where the virtual object that is the object to be gripped is displayed in a superimposed manner on the real object that is the real object on which the virtual object is to be superimposed, the object to be gripped is gripped in a pseudo manner by the user gripping the real object on which the virtual object is superimposed with the hand. Thus, in this case, when the user grips the object to be gripped in a pseudo manner, the user performs action of actually gripping the real object on which the virtual object is superimposed after bringing the hand close to the object to be gripped (real object on which the virtual object is superimposed). After the object to be gripped has been gripped in a pseudo manner, the object to be gripped is moved by the user lifting the object to be gripped (real object on which the virtual object is superimposed), or the like.

Thus, by making determination based on the distance between the hand of the user and the object to be gripped and the amount of movement of the object to be gripped as described above, it is possible to appropriately determine whether or not the object to be gripped has been gripped in a pseudo manner.

Furthermore, in the information processing apparatus (1C) as an embodiment, the object to be gripped is the hand of the user or an operation device having an operator, and the transparency control unit (8C) determines whether or not the object to be gripped has been gripped in a pseudo manner on the basis of gesture operation using the hand or operation using the operation device.

Accordingly, in a case where the object to be gripped is gripped in a pseudo manner by predetermined gesture operation by the hand of the user or predetermined operation using the operation device, it is possible to appropriately determine whether or not the object to be gripped has been gripped in a pseudo manner.

Furthermore, in the information processing apparatus (1D) as an embodiment, the real object is the hand of the user, and the transparency control unit (8D) performs, as the scene determination, determination based on a determination result as to whether the fingertip of the user and the line-of-sight of the user overlap, and performs control to increase the transparency of the real object in a case where it is determined that the fingertip and the line-of-sight overlap.

This can prevent the transparency of the hand from increasing until it is determined that the fingertip of the user and the line-of-sight overlap, that is, until it is determined that the fingertip is on the virtual object. Thus, for example, in a case where the virtual object that is an operation button is operated by the fingertip of the user, it is possible to allow the user to easily grasp a sense of distance to the virtual object. Then, the transparency of the hand is increased in response to the determination that the fingertip is on the virtual object, so that the user can see through the virtual object covered with the fingertip. For example, in a case where there is description information such as characters and marks in the virtual object, the user can visually recognize the description information.

Thus, according to the above configuration, it is possible to achieve both improvement in easiness of grasping the sense of distance to the virtual object and improvement in visibility of the virtual object.

Furthermore, in the information processing apparatus as an embodiment, the transparency control unit performs determination based on a determination result as to whether or not the hand of the user is in a pointing state as the scene determination.

This makes it possible to improve determination accuracy regarding the scene determination as to whether or not the operation is performed in a case where the virtual object is the operator such as the button to be operated with the fingertip.

Furthermore, the information processing apparatus (1E) as an embodiment includes an AR space image control unit (transmission image generation unit 20) that, in a case where there is a plurality of users sharing an AR space, and an AR space image generated by superimposing a virtual object on a captured image from a viewpoint position of one user among the users is displayed to another user among the users, controls transparency of a portion of the one user in the AR space image on the basis of a result of determination as to whether or not the portion of the one user exists between a viewpoint position of the other user and the virtual object looked at by the other user.

By controlling the transparency of the one user in the AR space image to be displayed to the other user using the virtual object looked at by the other user as a reference as described above, even if at least a portion of the one user exists between the viewpoint position of the one user and the virtual object, if at least the portion of the one user does not exist between the viewpoint position of the other user and the virtual object, at least the portion of the one user can be prevented from being made transparent in the AR space image displayed to the other user.

In other words, for the other user, it is possible to prevent at least the portion of the one user from being made transparent in the AR space image displayed to the other user although at least the portion of the one user does not exist in front of the virtual object looked at by the other user, so that it is possible to prevent the other user from feeling a sense of discomfort.

The information processing method as an embodiment is an information processing method including performing scene determination related to at least one of action of a user or a positional relationship between the user and a real object in a case where the real object exists between a viewpoint position and a virtual object, and controlling transparency of the real object on the basis of a result of the scene determination.

Furthermore, the recording medium as an embodiment is a recording medium in which a program readable by a computer device is recorded, and is a recording medium in which a program causing the computer device to implement a function of performing scene determination regarding at least one of action of a user or a positional relationship between the user and a real object in a case where the real object exists between a viewpoint position and a virtual object, and controlling transparency of the real object on the basis of a result of the scene

determination.

According to such an information processing method and a recording medium, it is possible to implement the information processing apparatus as the embodiment described above.

Furthermore, another information processing apparatus (1F) as an embodiment includes a transparency control unit (8F) that determines whether or not the user has performed predetermined action on the virtual object in a case where the real object exists behind the virtual object as viewed from the viewpoint position of the user, and controls the transparency of the virtual object on the basis of a determination result.

This makes it possible to make the virtual object in front of the real object transparent so as to correspond to a case where the user has performed predetermined action on the virtual object.

It is therefore possible to allow the user to see through the real object existing behind the virtual object in response to the user performing the predetermined action on the virtual object, so that it is possible to allow the user to interact with the real world.

Furthermore, in another information processing apparatus as an embodiment, the transparency control unit determines whether or not the user has gazed at the virtual object in a state where the distance between the virtual object and the user is within a predetermined distance, as the determination of whether or not the user has performed predetermined action.

As a result, the user only needs to approach the virtual object within the predetermined distance and gaze at the virtual object to interact with the real world. In other words, gesture operation required for the user to interact with the real world is only the operation of approaching the virtual object within the predetermined distance and gazing at the virtual object.

It is therefore possible to reduce operation burden on the user to interact with the real world.

Note that, the effects described in the present specification are merely examples and are not limited, and other effects may be provided.

<9. Present technology>

The present technology can also adopt the following configurations.

(1) An information processing apparatus including a transparency control unit that performs scene determination related to at least one of action of a user or a positional relationship between the user and a real object in a case where the real object exists between a viewpoint position and a virtual object, and controls transparency of the real object on the basis of a result of the scene determination.

(2) The information processing apparatus according to (1), in which the transparency control unit determines, as the scene determination, whether or not there is a risk of collision between the user and the real object on the basis of at least one of a distance between the user and the real object or a moving speed of the user, and performs control to decrease the transparency of the real object in a case where it is determined that there is the risk.

(3) The information processing apparatus according to (2), in which the transparency control unit determines, as the scene determination, whether or not the distance is equal to or less than a threshold, and performs control to decrease the transparency of the real object in a case where the distance is equal to or less than the threshold.

(4) The information processing apparatus according to (3), in which

a first threshold and a second threshold smaller than the first threshold are determined as the threshold for the distance, and

the transparency control unit gradually decreases the transparency of the real object according to the distance in a case where the distance is equal to or less than the first threshold and exceeds the second threshold, and controls the transparency of the real object to 0 in a case where the distance is equal to or less than the second threshold.

(5) The information processing apparatus according to any one of (2) to (4), in which the transparency control unit determines, as the scene determination, whether or not the moving speed is equal to or higher than a threshold, and performs control to decrease the transparency of the real object in a case where the moving speed is equal to or higher than the threshold.

(6) The information processing apparatus according to any one of (2) to (5), in which the transparency control unit performs the scene determination on the basis of both the distance and the moving speed.

(7) The information processing apparatus according to any one of (2) to (6), in which the transparency control unit determines whether or not a position and a ratio of the virtual object in a field of view satisfy a predetermined condition, and controls the real object to be opaque without performing the scene determination in a case where it is determined that the predetermined condition is not satisfied.

(8) The information processing apparatus according to (1), in which the transparency control unit determines, as the scene determination, whether or not the user has performed predetermined action on the virtual object.

(9) The information processing apparatus according to (8), in which

the virtual object is a virtual object that is an object to be gripped assumed to be gripped by the user, the real object is a gripping object to be used for gripping the object to be gripped in a pseudo manner, and

the transparency control unit determines whether or not the user has gripped the object to be gripped in a pseudo manner as the scene determination, and performs control to increase transparency of the gripping object in a case where it is determined that the user has gripped the object to be gripped in a pseudo manner.

(10) The information processing apparatus according to (9), in which

the object to be gripped is a virtual object to be superimposed and displayed on a predetermined real object on which the virtual object is to be superimposed, the gripping object is a hand of the user, and

the transparency control unit determines whether or not the pseudo gripping has been performed on the basis of a distance between the hand and the object to be gripped and an amount of movement of the object to be gripped.

(11) The information processing apparatus according to (9), in which

the gripping object is a hand of the user or an operation device having an operator, and

the transparency control unit determines whether or not the pseudo gripping has been performed on the basis of gesture operation using the hand or operation using the operation device.

(12) The information processing apparatus according to (8), in which

the real object is a hand of the user, and

the transparency control unit performs determination based on a determination result as to whether or not a fingertip of the user and a line-of-sight of the user overlap as the scene determination, and performs control to increase the transparency of the real object in a case where it is determined that the fingertip and the line-of-sight overlap.

(13) The information processing apparatus according to (12), in which the transparency control unit performs determination based on a determination result as to whether or not the hand of the user is in a pointing state, as the scene determination.

(14) The information processing apparatus according to any one of (1) to (14), including an AR space image control unit that, in a case where there is a plurality of users sharing an AR space, and an AR space image generated by superimposing a virtual object on a captured image from a viewpoint position of one user among the users is displayed to another user among the users, controls transparency of a portion of the one user in the AR space image on the basis of a result of determination as to whether or not at least the portion of the one user exists between a viewpoint position of the other user and a virtual object looked at by the other user.

(15) An information processing method including performing scene determination related to at least one of action of a user or a positional relationship between the user and a real object in a case where the real object exists between a viewpoint position and a virtual object, and controlling transparency of the real object on the basis of a result of the scene determination.

(16) A recording medium in which a program readable by a computer device is recorded, the program causing the computer device to implement a function of performing scene determination related to at least one of action of a user or a positional relationship between the user and a real object in a case where the real object exists between a viewpoint position and a virtual object, and controlling transparency of the real object on the basis of a result of the scene determination.

(17) An information processing apparatus including a transparency control unit that determines whether or not a user has performed predetermined action on a virtual object in a case where a real object exists behind the virtual object as viewed from a viewpoint position of the user, and controls transparency of the virtual object on the basis of a result of the determination.

(18) The information processing apparatus according to (17), in which the transparency control unit determines whether or not the user has gazed at the virtual object in a state in which a distance between the virtual object and the user is within a predetermined distance, as the determination as to whether or not the user has performed the predetermined action.

REFERENCE SIGNS LIST

1, 1A, 1B, 1C, 1D, 1E, 1F Information processing apparatus
2 IMU
3 Image sensor
4 Distance measurement sensor
5 Self-position/posture estimation unit
6 Distance image generation unit
7 Virtual object drawing unit
8, 8B, 8C, 8D, 8E, 8F Transparency control unit
9, 9A, 9F Synthesis unit
10 Display control unit
11 Display unit
15, 15A, 15C, 15D, 15E, 15F Calculation unit
Vo Virtual object
Ro Real object
16 Dimming unit
17 Object recognition unit
18 Line-of-sight estimation unit
19 Reception unit
20 Transmission image generation unit
21 Transmission unit

## Claims

1. An information processing apparatus comprising a transparency control unit that performs scene determination related to at least one of action of a user or a positional relationship between the user and a real object in a case where the real object exists between a viewpoint position and a virtual object, and controls transparency of the real object on a basis of a result of the scene determination.

2. The information processing apparatus according to claim 1, wherein the transparency control unit determines, as the scene determination, whether or not there is a risk of collision between the user and the real object on a basis of at least one of a distance between the user and the real object or a moving speed of the user, and performs control to decrease the transparency of the real object in a case where it is determined that there is the risk.

3. The information processing apparatus according to claim 2, wherein the transparency control unit determines, as the scene determination, whether or not the distance is equal to or less than a threshold, and performs control to decrease the transparency of the real object in a case where the distance is equal to or less than the threshold.

4. The information processing apparatus according to claim 3, wherein

   a first threshold and a second threshold smaller than the first threshold are determined as the threshold for the distance, and
   the transparency control unit gradually decreases the transparency of the real object according to the distance in a case where the distance is equal to or less than the first threshold and exceeds the second threshold, and controls the transparency of the real object to 0 in a case where the distance is equal to or less than the second threshold.

5. The information processing apparatus according to claim 2, wherein the transparency control unit determines, as the scene determination, whether or not the moving speed is equal to or higher than a threshold, and performs control to decrease the transparency of the real object in a case where the moving speed is equal to or higher than the threshold.

6. The information processing apparatus according to claim 2, wherein the transparency control unit performs the scene determination on a basis of both the distance and the moving speed.

7. The information processing apparatus according to claim 2, wherein the transparency control unit determines whether or not a position and a ratio of the virtual object in a field of view satisfy a predetermined condition, and controls the real object to be opaque without performing the scene determination in a case where it is determined that the predetermined condition is not satisfied.

8. The information processing apparatus according to claim 1, wherein the transparency control unit determines, as the scene determination, whether or not the user has performed predetermined action on the virtual object.

9. The information processing apparatus according to claim 8, wherein

   the virtual object is a virtual object that is an object to be gripped assumed to be gripped by the user, the real object is a gripping object to be used for gripping the object to be gripped in a pseudo manner, and
   the transparency control unit determines whether or not the user has gripped the object to be gripped in a pseudo manner as the scene determination, and performs control to increase transparency of the gripping object in a case where it is determined that the user has gripped the object to be gripped in a pseudo manner.

**10.** The information processing apparatus according to claim 9, wherein

the object to be gripped is a virtual object to be superimposed and displayed on a predetermined real object on which the virtual object is to be superimposed, the gripping object is a hand of the user, and
the transparency control unit determines whether or not the pseudo gripping has been performed on a basis of a distance between the hand and the object to be gripped and an amount of movement of the object to be gripped.

**11.** The information processing apparatus according to claim 9, wherein

the gripping object is a hand of the user or an operation device having an operator, and
the transparency control unit determines whether or not the pseudo gripping has been performed on a basis of gesture operation using the hand or operation using the operation device.

**12.** The information processing apparatus according to claim 8, wherein

the real object is a hand of the user, and
the transparency control unit performs determination based on a determination result as to whether or not a fingertip of the user and a line-of-sight of the user overlap as the scene determination, and performs control to increase the transparency of the real object in a case where it is determined that the fingertip and the line-of-sight overlap.

**13.** The information processing apparatus according to claim 12, wherein the transparency control unit performs determination based on a determination result as to whether or not the hand of the user is in a pointing state, as the scene determination.

**14.** The information processing apparatus according to claim 1, further comprising
an AR space image control unit that, in a case where there is a plurality of users sharing an AR space, and an AR space image generated by superimposing a virtual object on a captured image from a viewpoint position of one user among the users is displayed to another user among the users, controls transparency of a portion of the one user in the AR space image on a basis of a result of determination as to whether or not at least the portion of the one user exists between a viewpoint position of the other user and the virtual object looked at by the other user.

**15.** An information processing method comprising performing scene determination related to at least one of action of a user or a positional relationship between the user and a real object in a case where the real object exists between a viewpoint position and a virtual object, and controlling transparency of the real object on a basis of a result of the scene determination.

**16.** A recording medium in which a program readable by a computer device is recorded,
the program causing the computer device to implement a function of performing scene determination related to at least one of action of a user or a positional relationship between the user and a real object in a case where the real object exists between a viewpoint position and a virtual object, and controlling transparency of the real object on a basis of a result of the scene determination.

FIG. 1

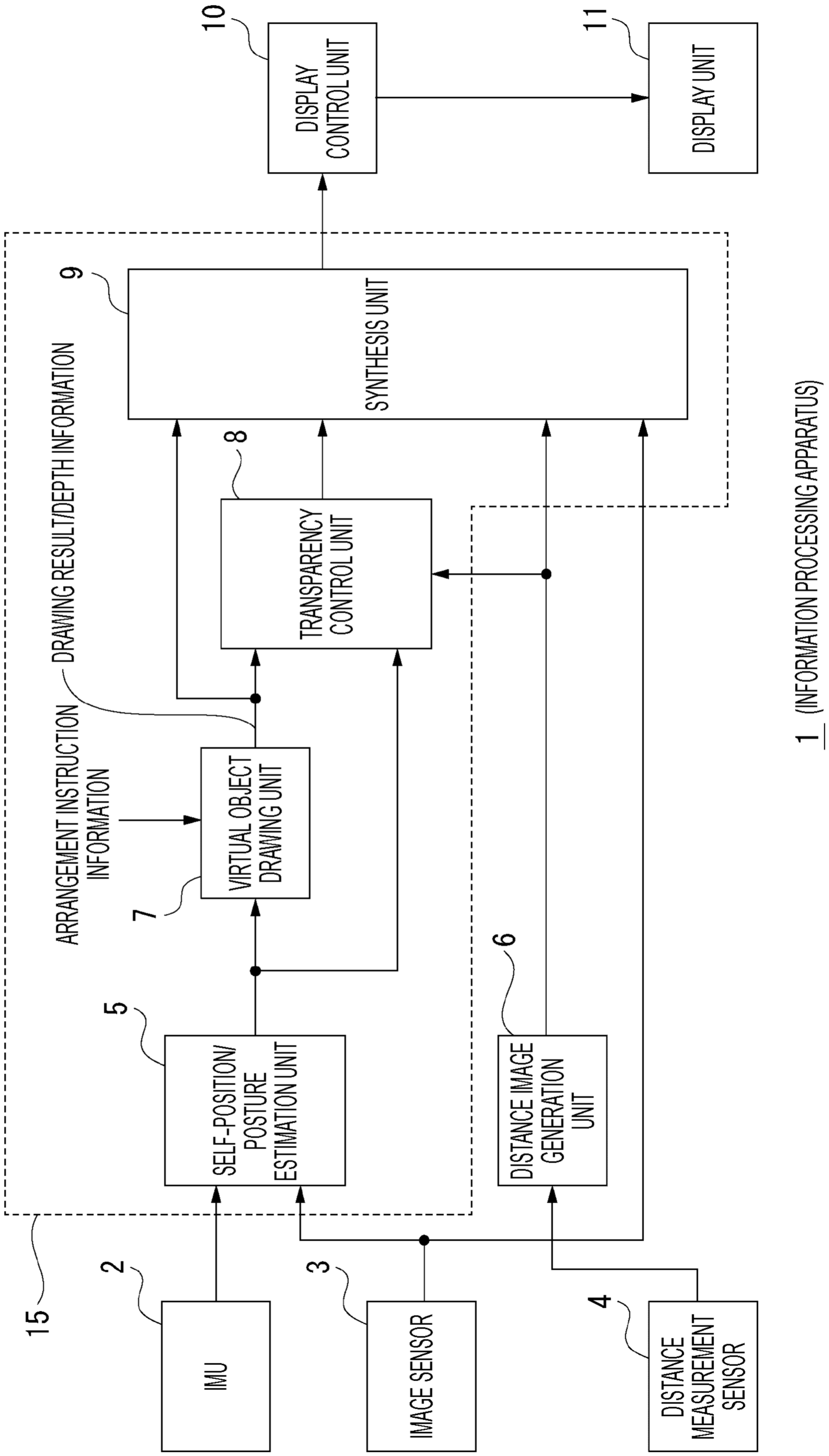
10
DISPLAY CONTROL UNIT
11
DISPLAY UNIT
9
SYNTHESIS UNIT
DRAWING RESULT/DEPTH INFORMATION
8
TRANSPARENCY CONTROL UNIT
ARRANGEMENT INSTRUCTION INFORMATION
7
VIRTUAL OBJECT DRAWING UNIT
5
SELF-POSITION/ POSTURE ESTIMATION UNIT
6
DISTANCE IMAGE GENERATION UNIT
15
2
IMU
3
IMAGE SENSOR
4
DISTANCE MEASUREMENT SENSOR
1 (INFORMATION PROCESSING APPARATUS)

FIG. 2

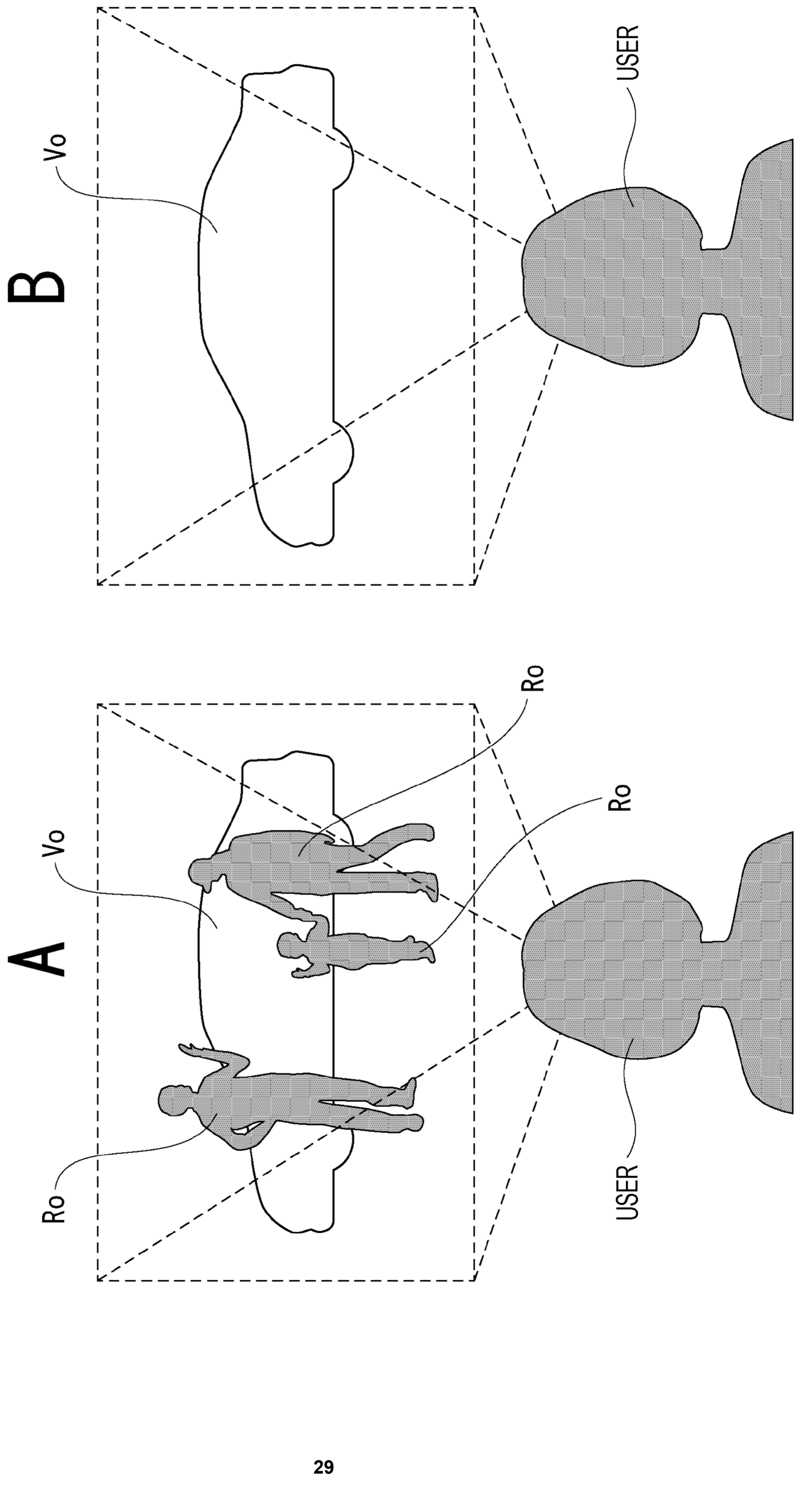

FIG. 3

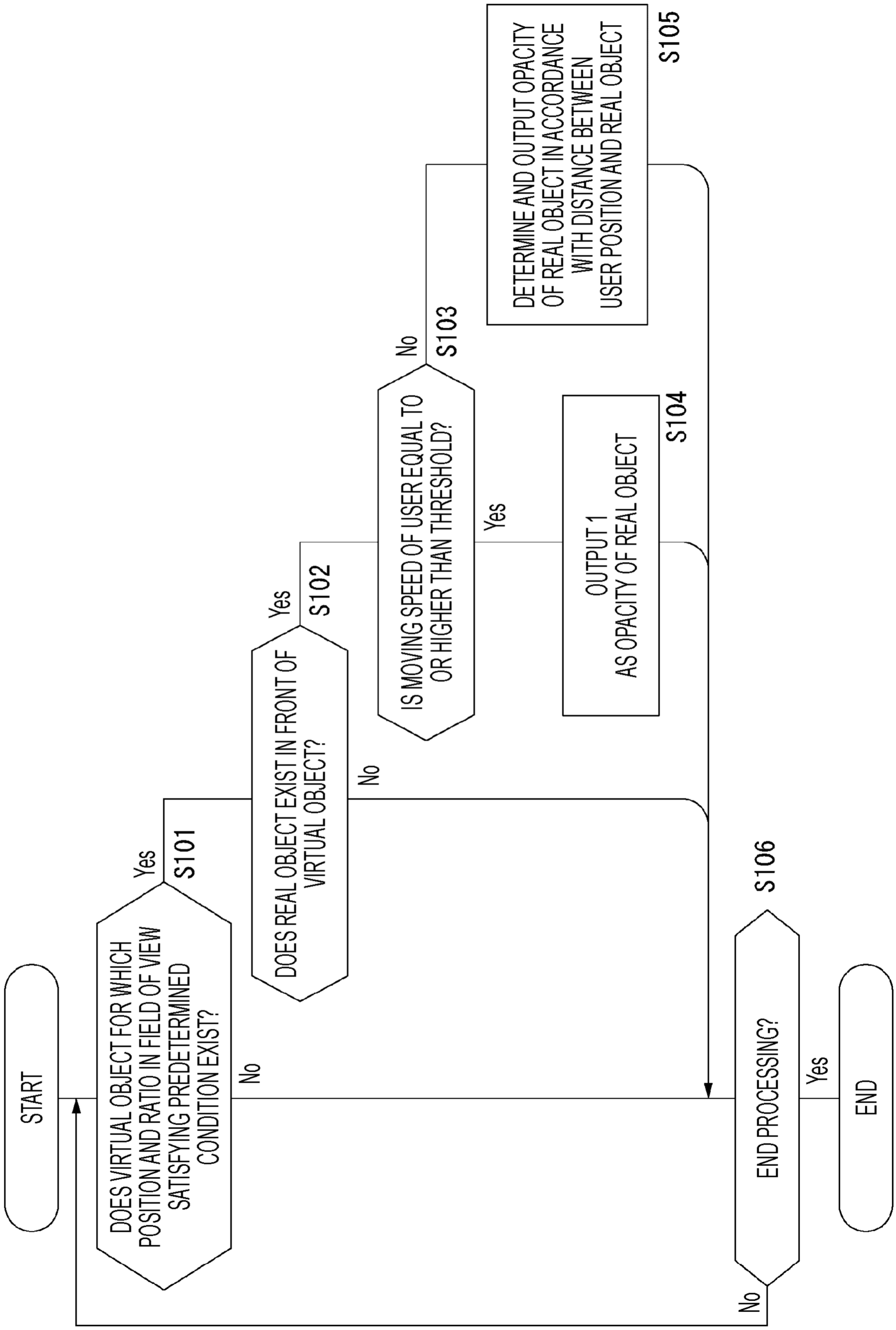
START
DOES VIRTUAL OBJECT FOR WHICH POSITION AND RATIO IN FIELD OF VIEW SATISFYING PREDETERMINED CONDITION EXIST?
S101
Yes
No
DOES REAL OBJECT EXIST IN FRONT OF VIRTUAL OBJECT?
S102
Yes
No
IS MOVING SPEED OF USER EQUAL TO OR HIGHER THAN THRESHOLD?
S103
Yes
No
OUTPUT 1 AS OPACITY OF REAL OBJECT
S104
DETERMINE AND OUTPUT OPACITY OF REAL OBJECT IN ACCORDANCE WITH DISTANCE BETWEEN USER POSITION AND REAL OBJECT
S105
END PROCESSING?
S106
Yes
No
END

*FIG. 4*

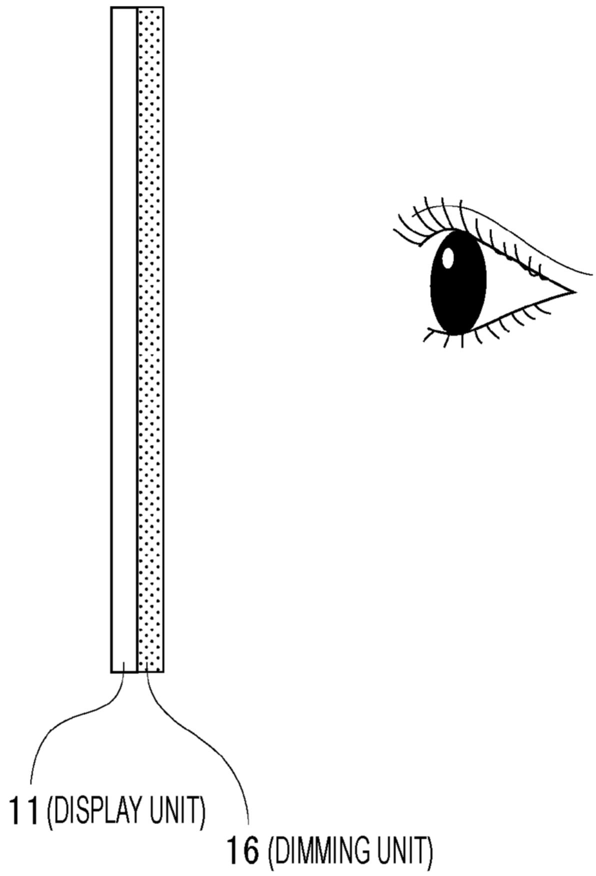

FIG. 5

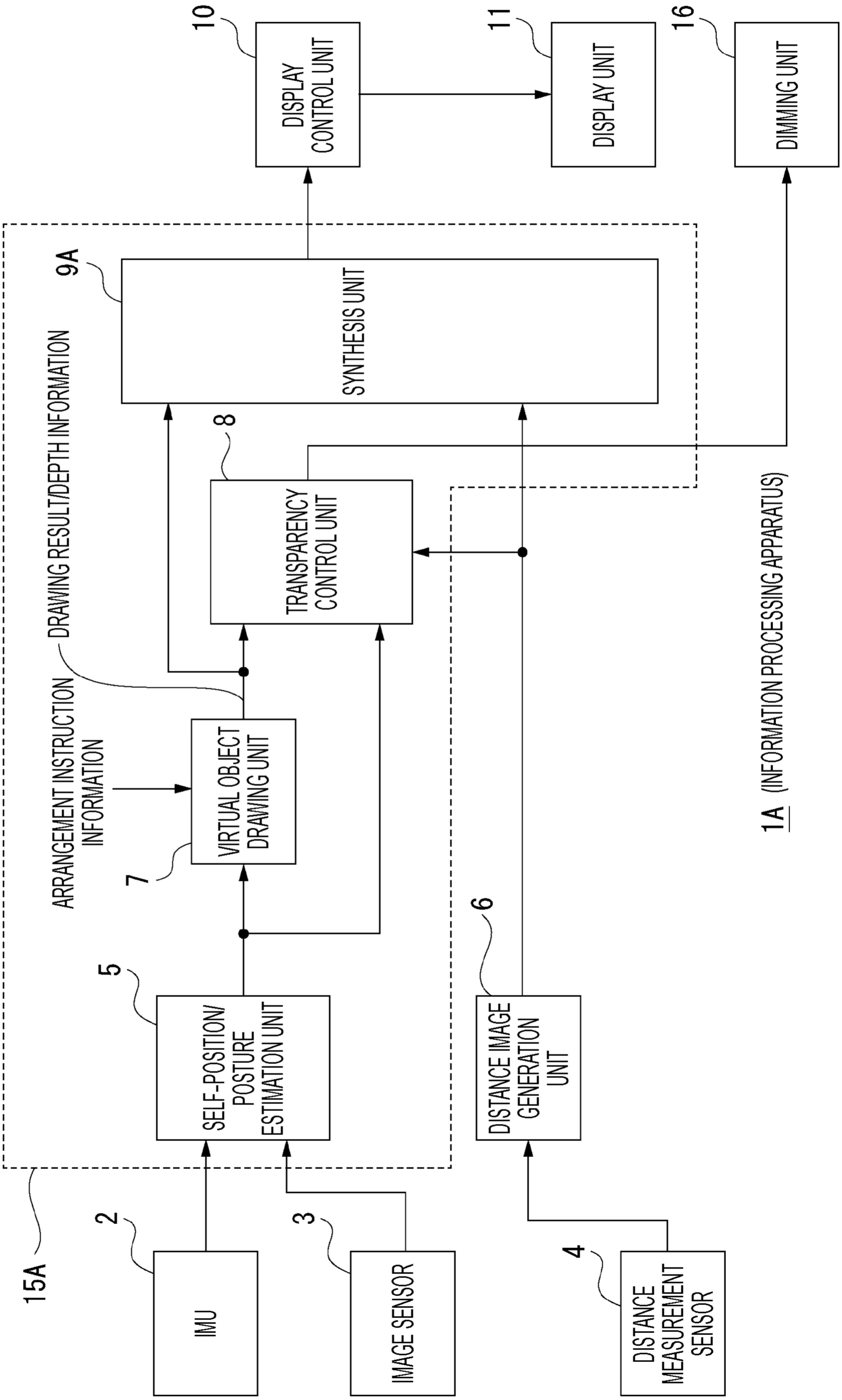
IMU
IMAGE SENSOR
DISTANCE MEASUREMENT SENSOR
SELF-POSITION/ POSTURE ESTIMATION UNIT
DISTANCE IMAGE GENERATION UNIT
ARRANGEMENT INSTRUCTION INFORMATION
VIRTUAL OBJECT DRAWING UNIT
DRAWING RESULT/DEPTH INFORMATION
TRANSPARENCY CONTROL UNIT
SYNTHESIS UNIT
DISPLAY CONTROL UNIT
DISPLAY UNIT
DIMMING UNIT
1A (INFORMATION PROCESSING APPARATUS)
2
3
4
5
6
7
8
9A
10
11
15A
16

FIG. 6

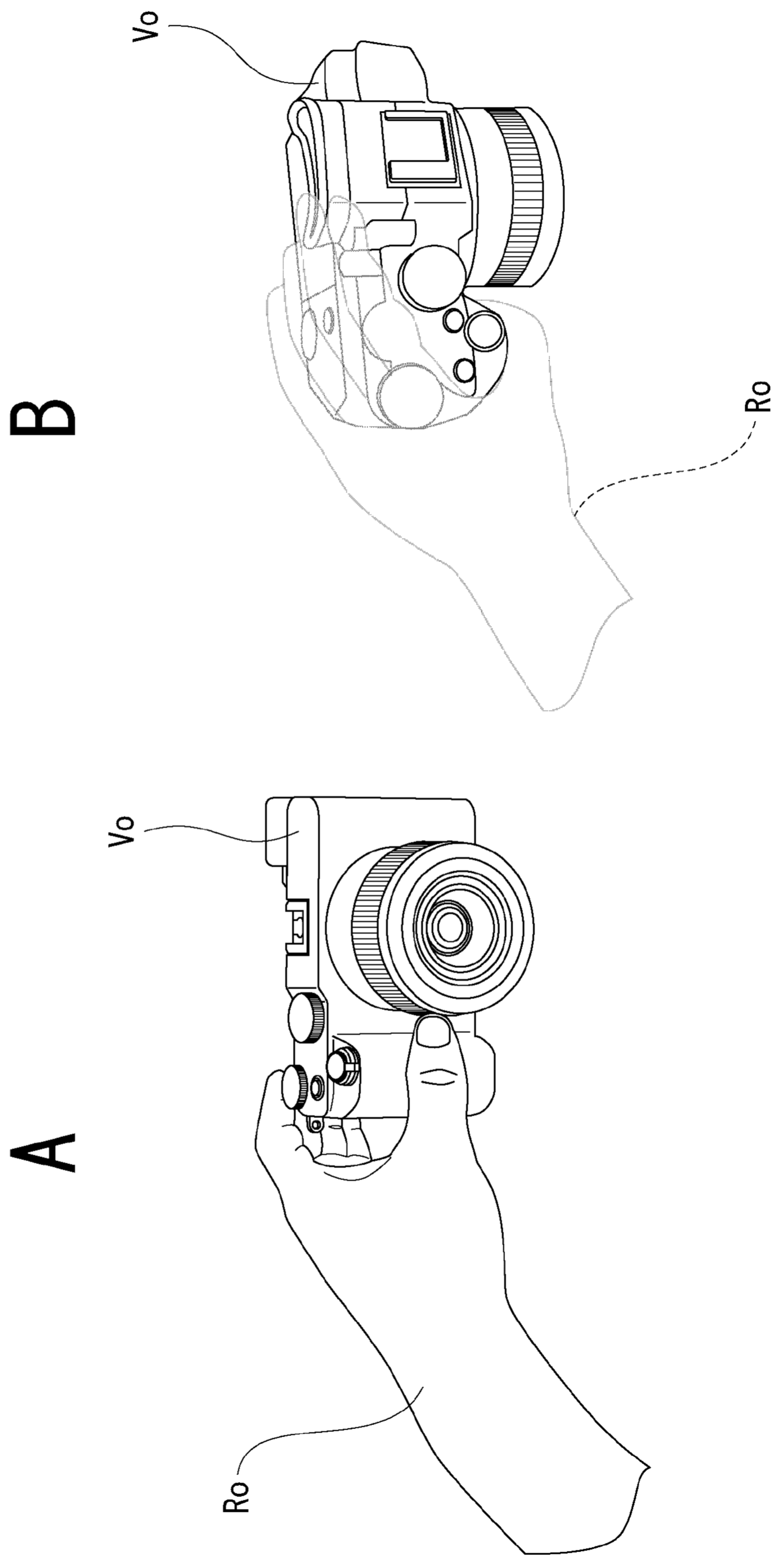

FIG. 7

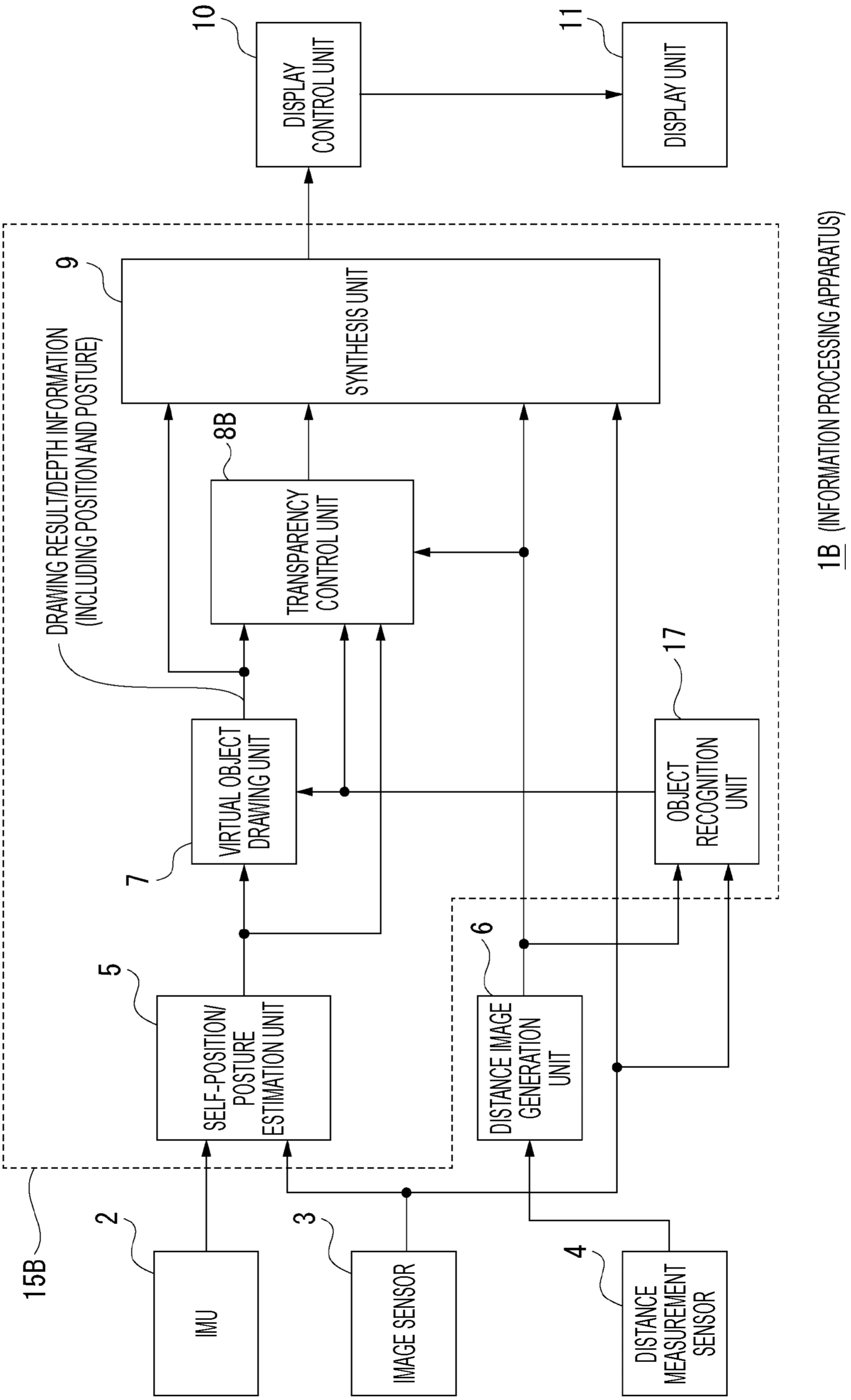
10
DISPLAY CONTROL UNIT
11
DISPLAY UNIT
9
SYNTHESIS UNIT
DRAWING RESULT/DEPTH INFORMATION (INCLUDING POSITION AND POSTURE)
8B
TRANSPARENCY CONTROL UNIT
7
VIRTUAL OBJECT DRAWING UNIT
17
OBJECT RECOGNITION UNIT
5
SELF-POSITION/ POSTURE ESTIMATION UNIT
6
DISTANCE IMAGE GENERATION UNIT
15B
2
IMU
3
IMAGE SENSOR
4
DISTANCE MEASUREMENT SENSOR
1B (INFORMATION PROCESSING APPARATUS)

FIG. 8

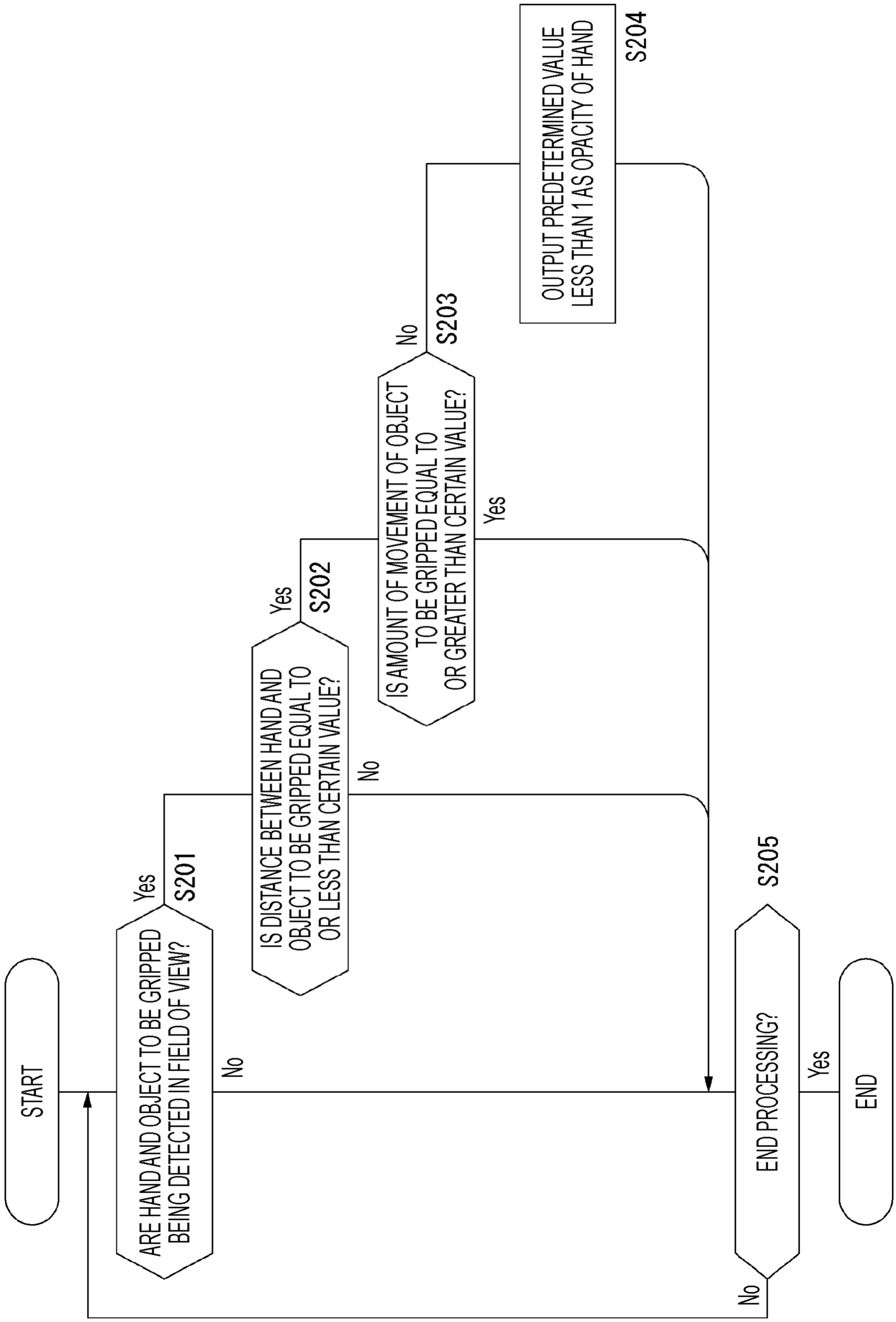
START
ARE HAND AND OBJECT TO BE GRIPPED BEING DETECTED IN FIELD OF VIEW?
S201
Yes
No
IS DISTANCE BETWEEN HAND AND OBJECT TO BE GRIPPED EQUAL TO OR LESS THAN CERTAIN VALUE?
S202
Yes
No
IS AMOUNT OF MOVEMENT OF OBJECT TO BE GRIPPED EQUAL TO OR GREATER THAN CERTAIN VALUE?
S203
No
Yes
OUTPUT PREDETERMINED VALUE LESS THAN 1 AS OPACITY OF HAND
S204
END PROCESSING?
S205
Yes
No
END

FIG. 9

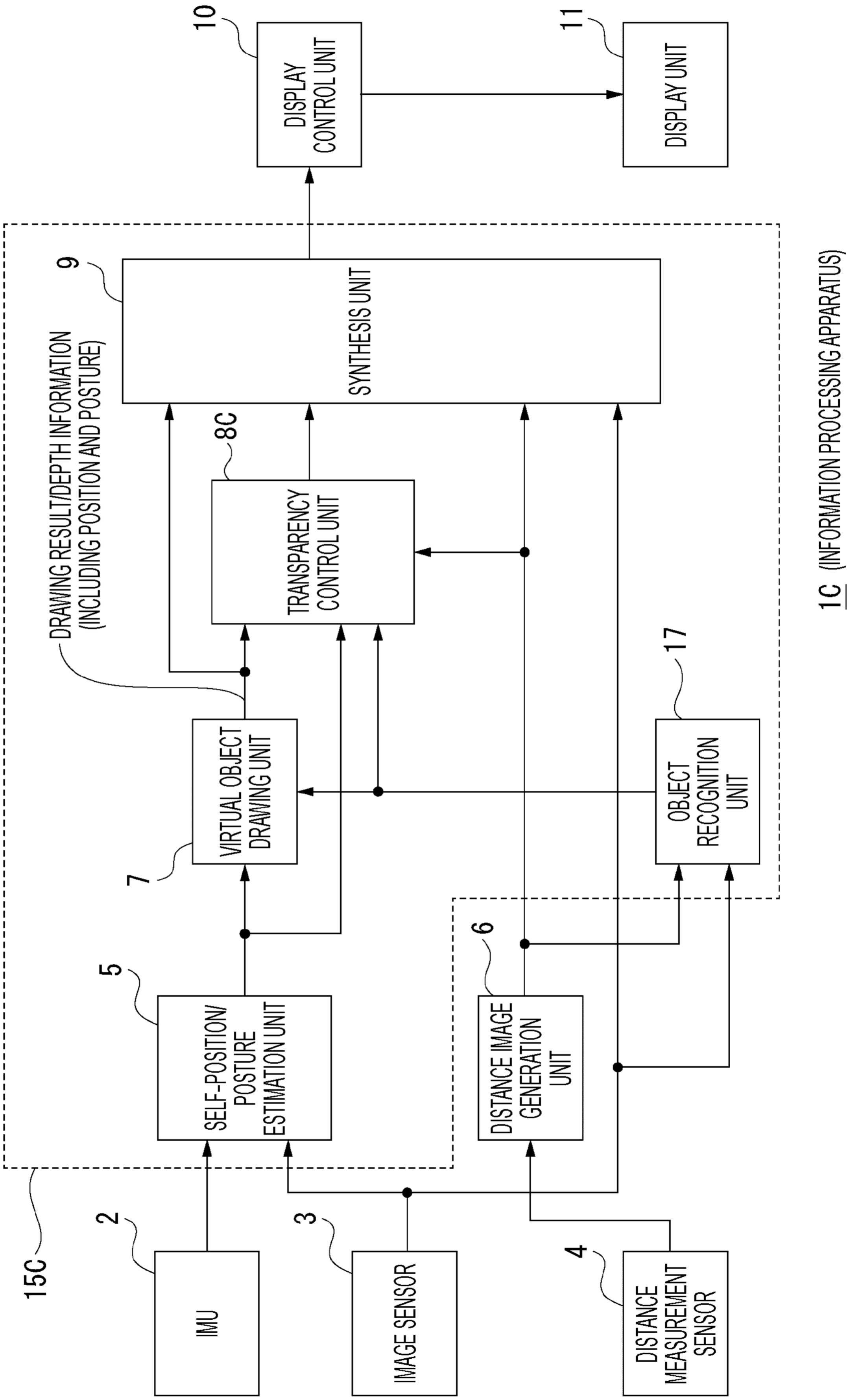
10
DISPLAY CONTROL UNIT
11
DISPLAY UNIT
9
SYNTHESIS UNIT
DRAWING RESULT/DEPTH INFORMATION (INCLUDING POSITION AND POSTURE)
8C
TRANSPARENCY CONTROL UNIT
1C (INFORMATION PROCESSING APPARATUS)
17
7
VIRTUAL OBJECT DRAWING UNIT
OBJECT RECOGNITION UNIT
6
5
SELF-POSITION/ POSTURE ESTIMATION UNIT
DISTANCE IMAGE GENERATION UNIT
15C
2
IMU
3
IMAGE SENSOR
4
DISTANCE MEASUREMENT SENSOR

FIG. 10

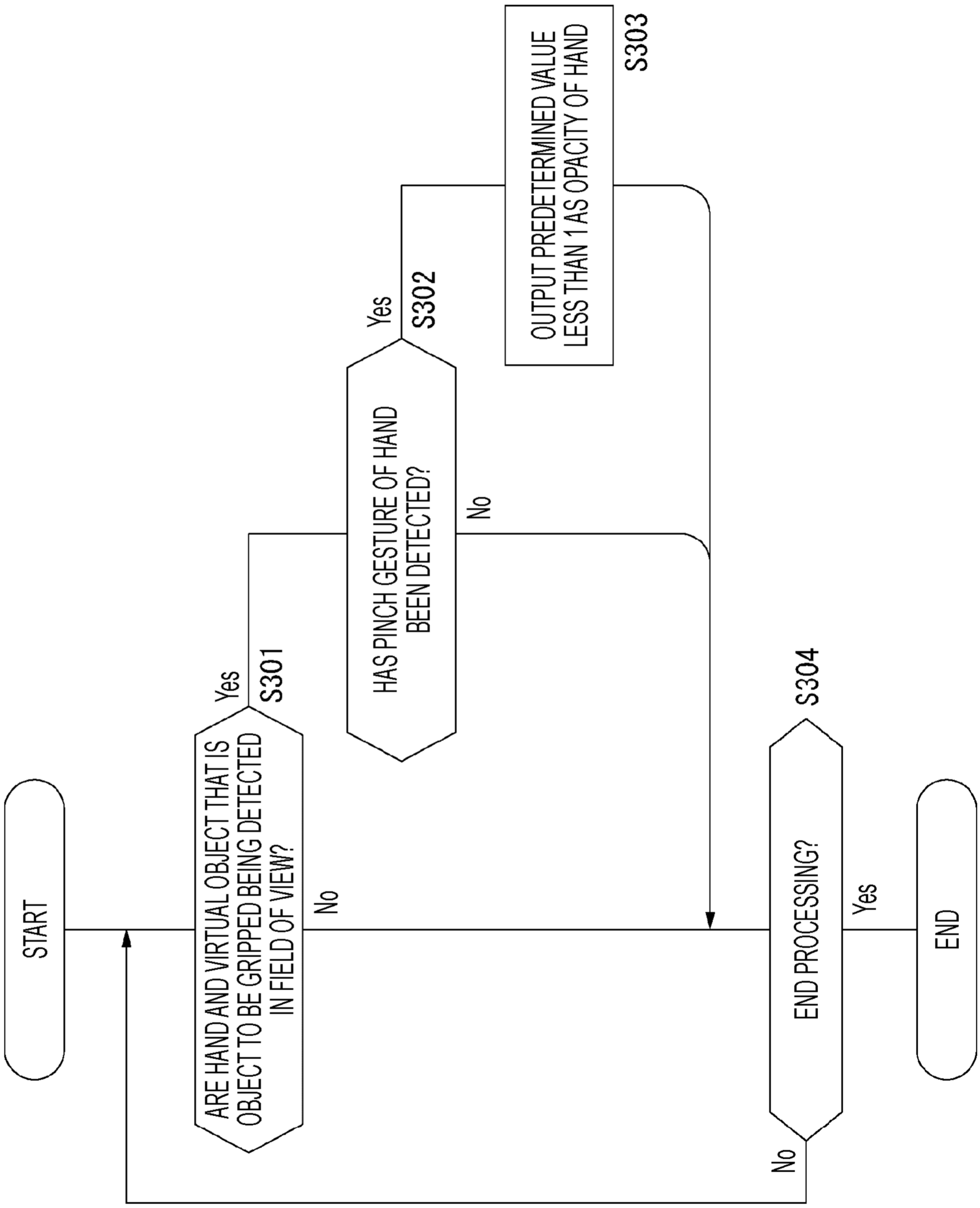
START
ARE HAND AND VIRTUAL OBJECT THAT IS OBJECT TO BE GRIPPED BEING DETECTED IN FIELD OF VIEW?
S301
Yes
No
HAS PINCH GESTURE OF HAND BEEN DETECTED?
S302
Yes
No
OUTPUT PREDETERMINED VALUE LESS THAN 1 AS OPACITY OF HAND
S303
END PROCESSING?
S304
Yes
No
END

FIG. 11

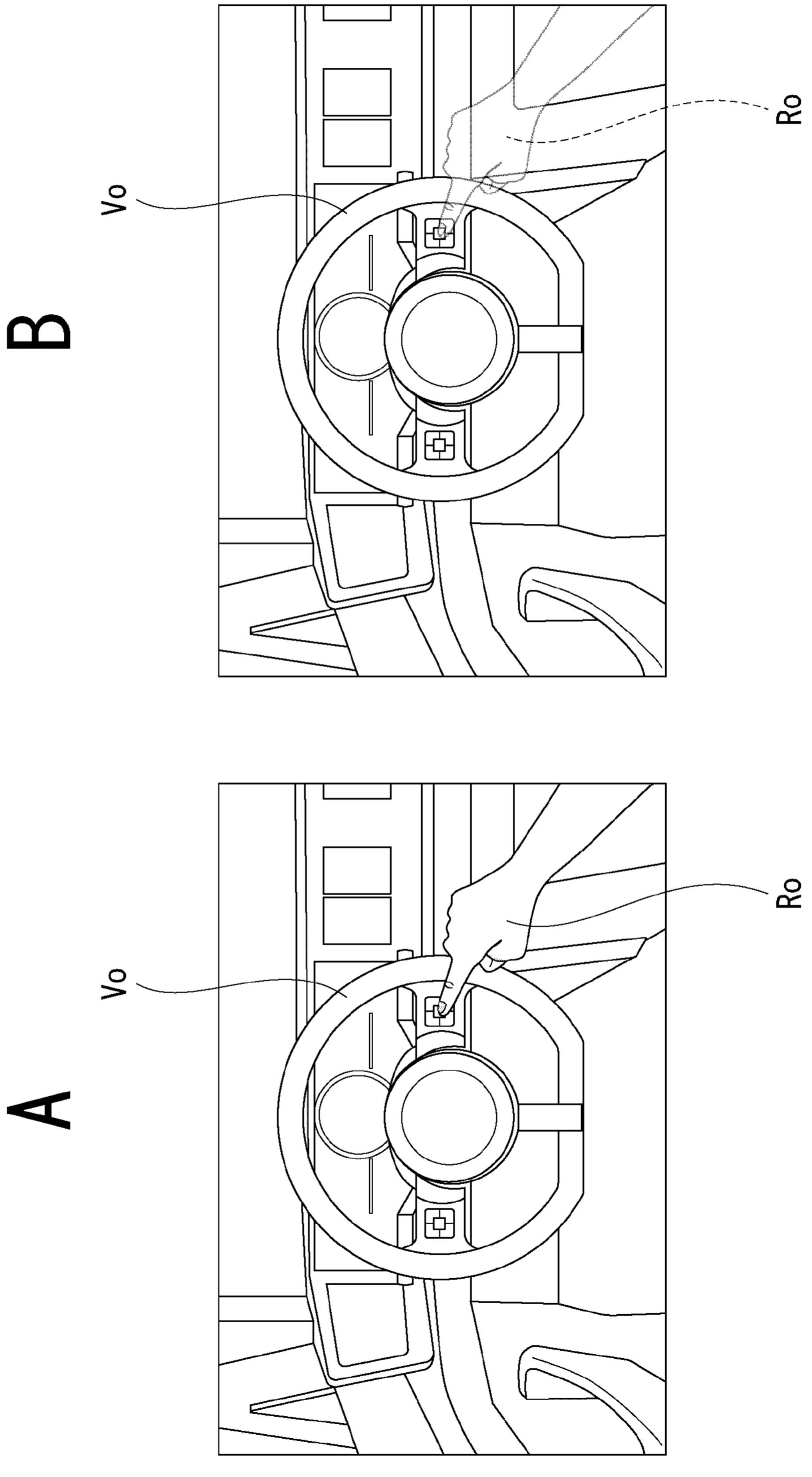

FIG. 12

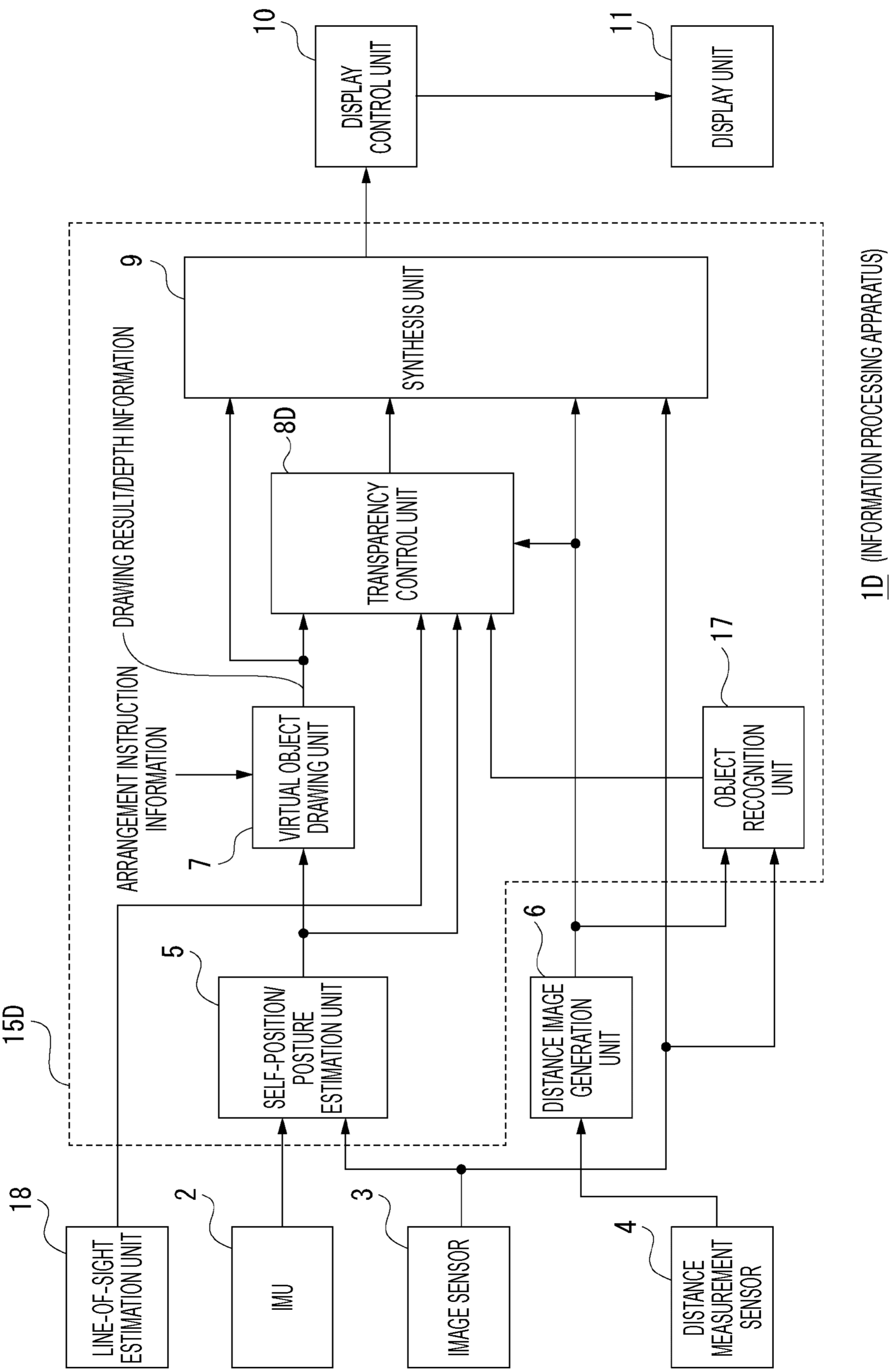
10
DISPLAY CONTROL UNIT
11
DISPLAY UNIT
9
SYNTHESIS UNIT
DRAWING RESULT/DEPTH INFORMATION
8D
TRANSPARENCY CONTROL UNIT
ARRANGEMENT INSTRUCTION INFORMATION
7
VIRTUAL OBJECT DRAWING UNIT
17
OBJECT RECOGNITION UNIT
15D
5
SELF-POSITION/ POSTURE ESTIMATION UNIT
6
DISTANCE IMAGE GENERATION UNIT
1D (INFORMATION PROCESSING APPARATUS)
18
LINE-OF-SIGHT ESTIMATION UNIT
2
IMU
3
IMAGE SENSOR
4
DISTANCE MEASUREMENT SENSOR

FIG. 13

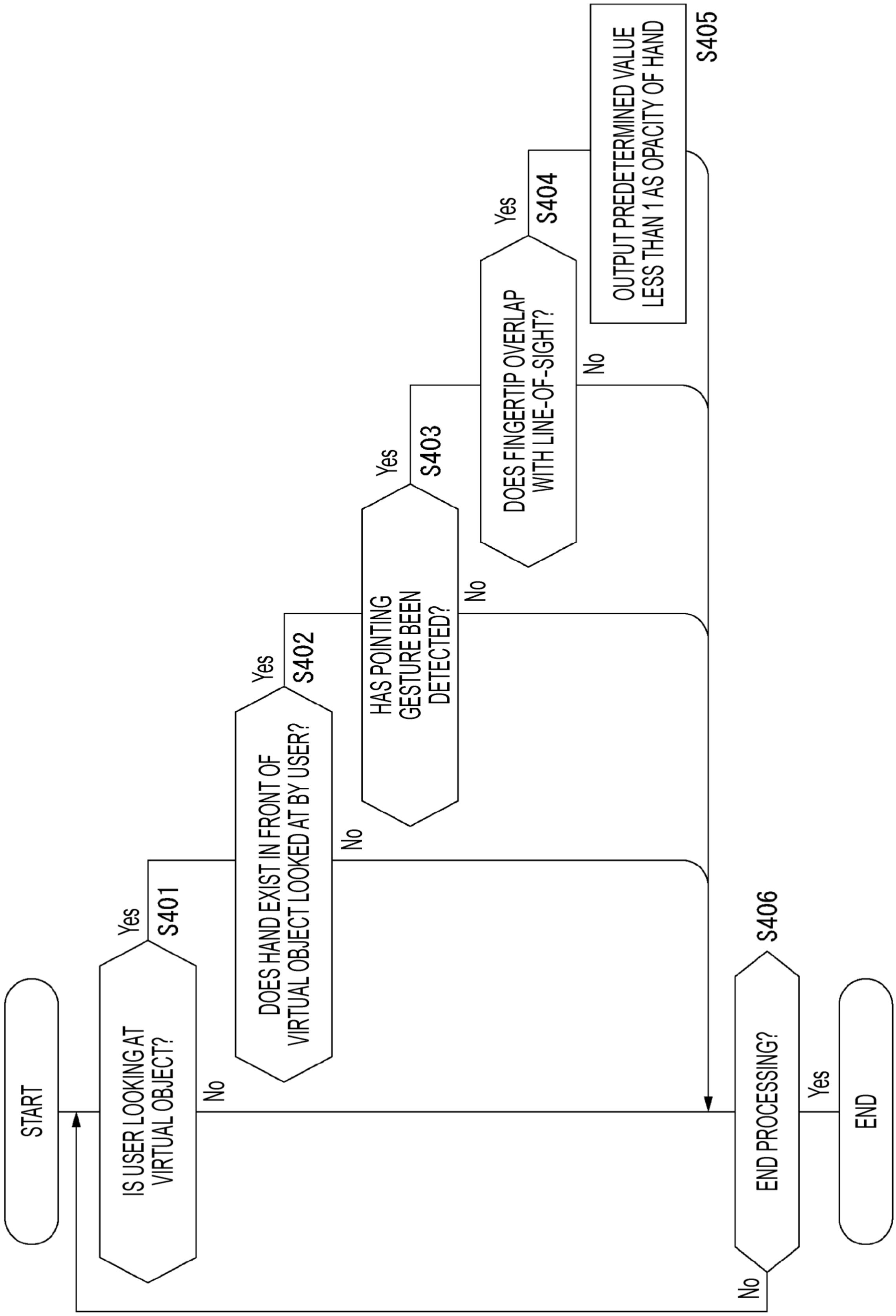
START
IS USER LOOKING AT VIRTUAL OBJECT?
S401
Yes
No
DOES HAND EXIST IN FRONT OF VIRTUAL OBJECT LOOKED AT BY USER?
S402
Yes
No
HAS POINTING GESTURE BEEN DETECTED?
S403
Yes
No
DOES FINGERTIP OVERLAP WITH LINE-OF-SIGHT?
S404
Yes
No
OUTPUT PREDETERMINED VALUE LESS THAN 1 AS OPACITY OF HAND
S405
END PROCESSING?
S406
Yes
No
END

FIG. 14

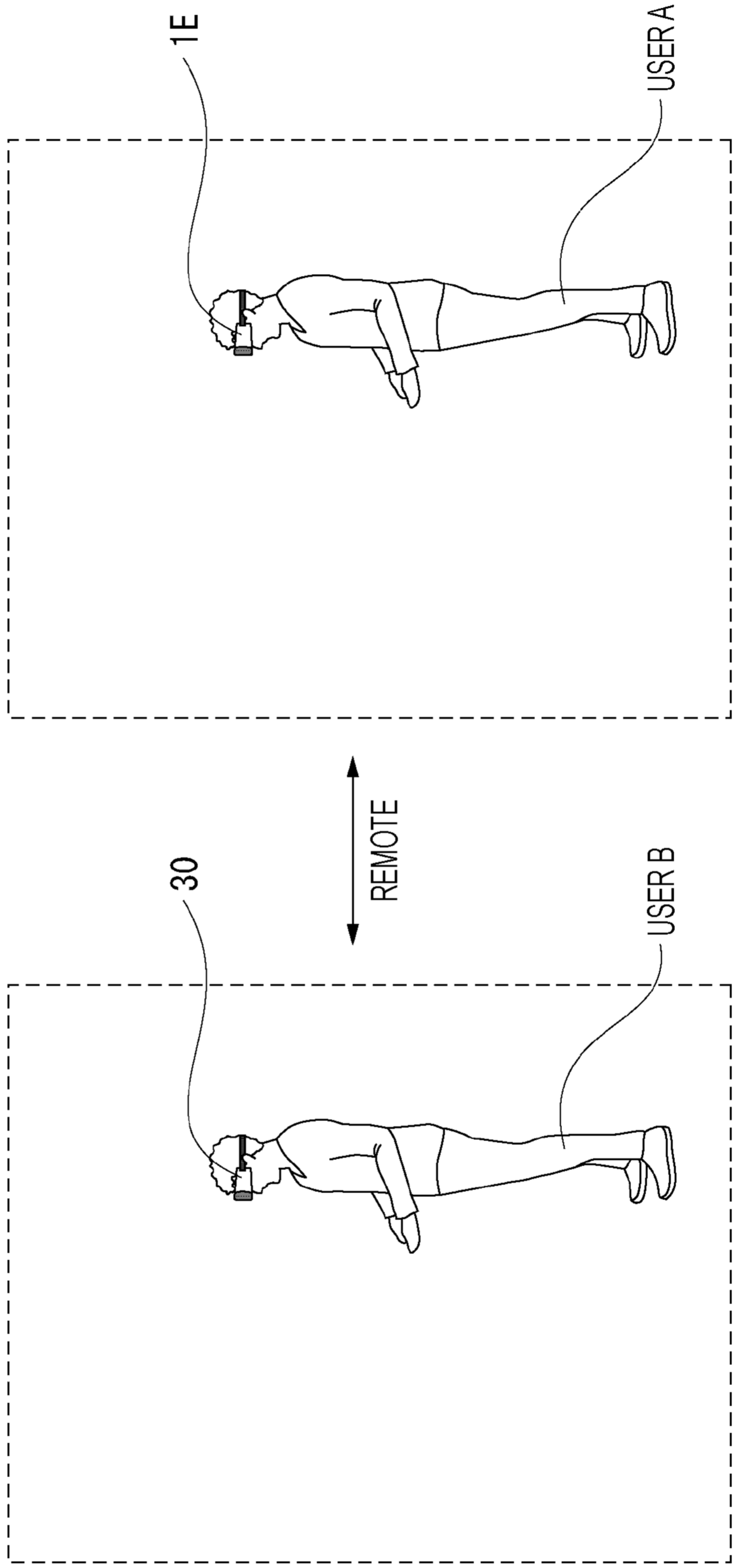

FIG. 15

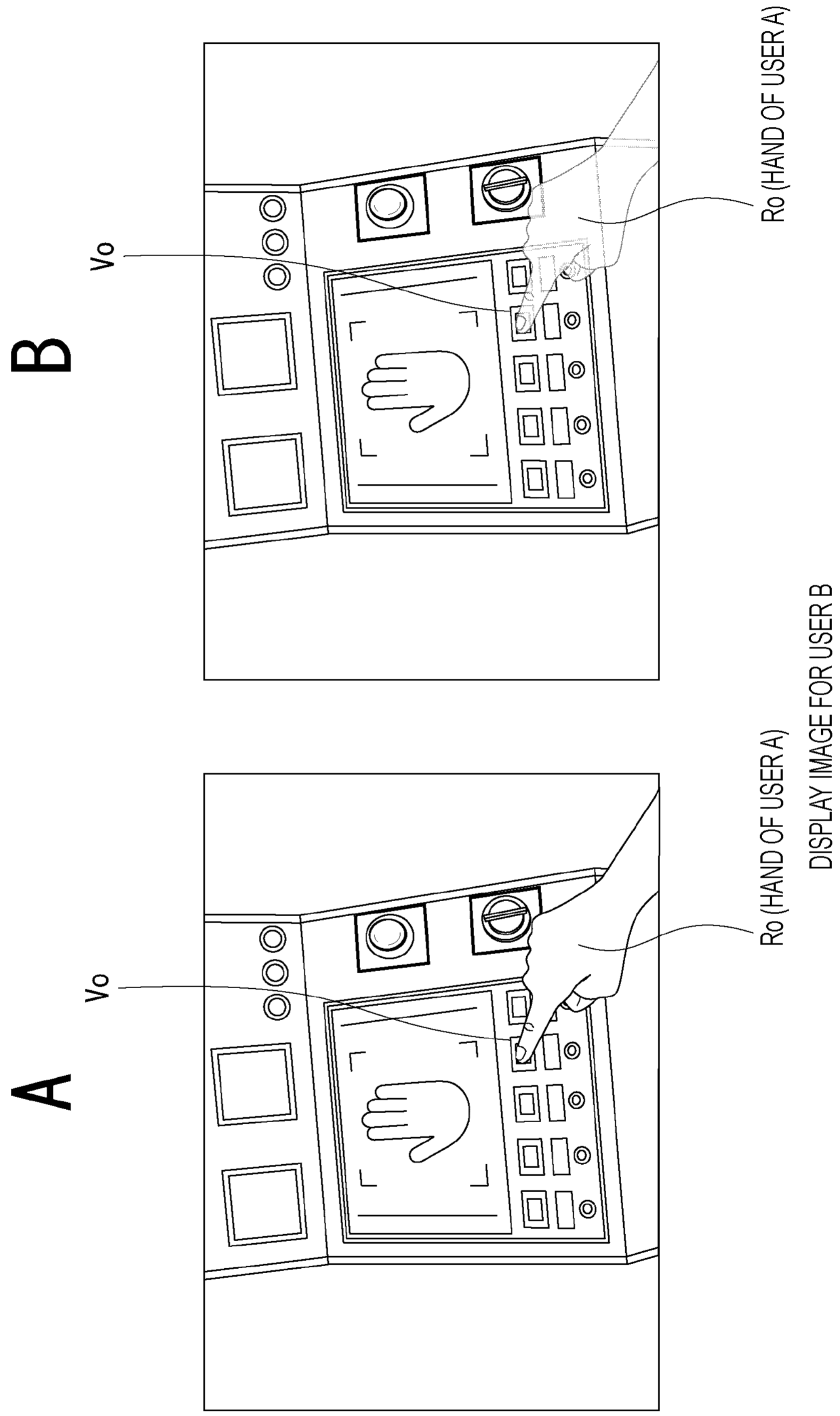
A
B
Vo
Ro (HAND OF USER A)
Vo
Ro (HAND OF USER A)
DISPLAY IMAGE FOR USER B

FIG. 16

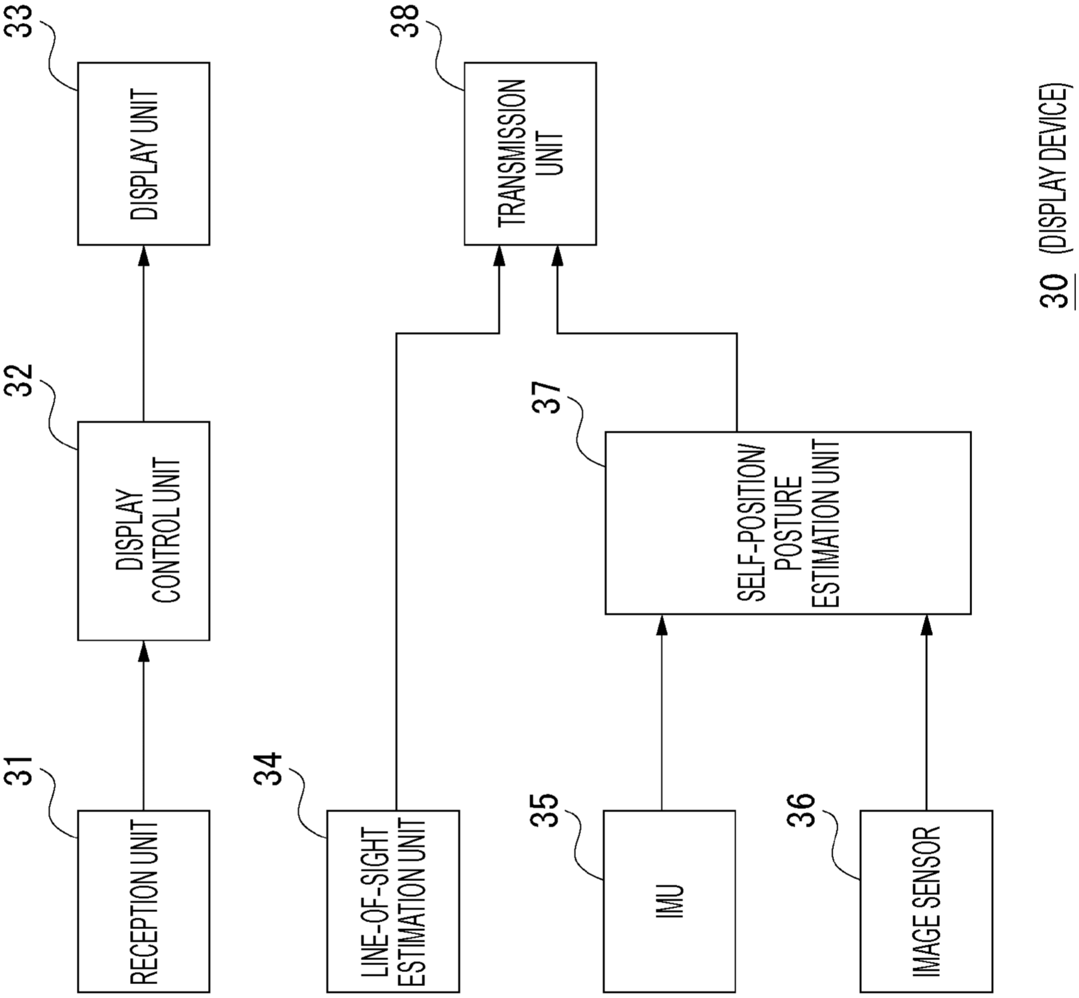
31
RECEPTION UNIT
32
DISPLAY CONTROL UNIT
33
DISPLAY UNIT
34
LINE-OF-SIGHT ESTIMATION UNIT
35
IMU
36
IMAGE SENSOR
37
SELF-POSITION/ POSTURE ESTIMATION UNIT
38
TRANSMISSION UNIT
30 (DISPLAY DEVICE)

FIG. 17

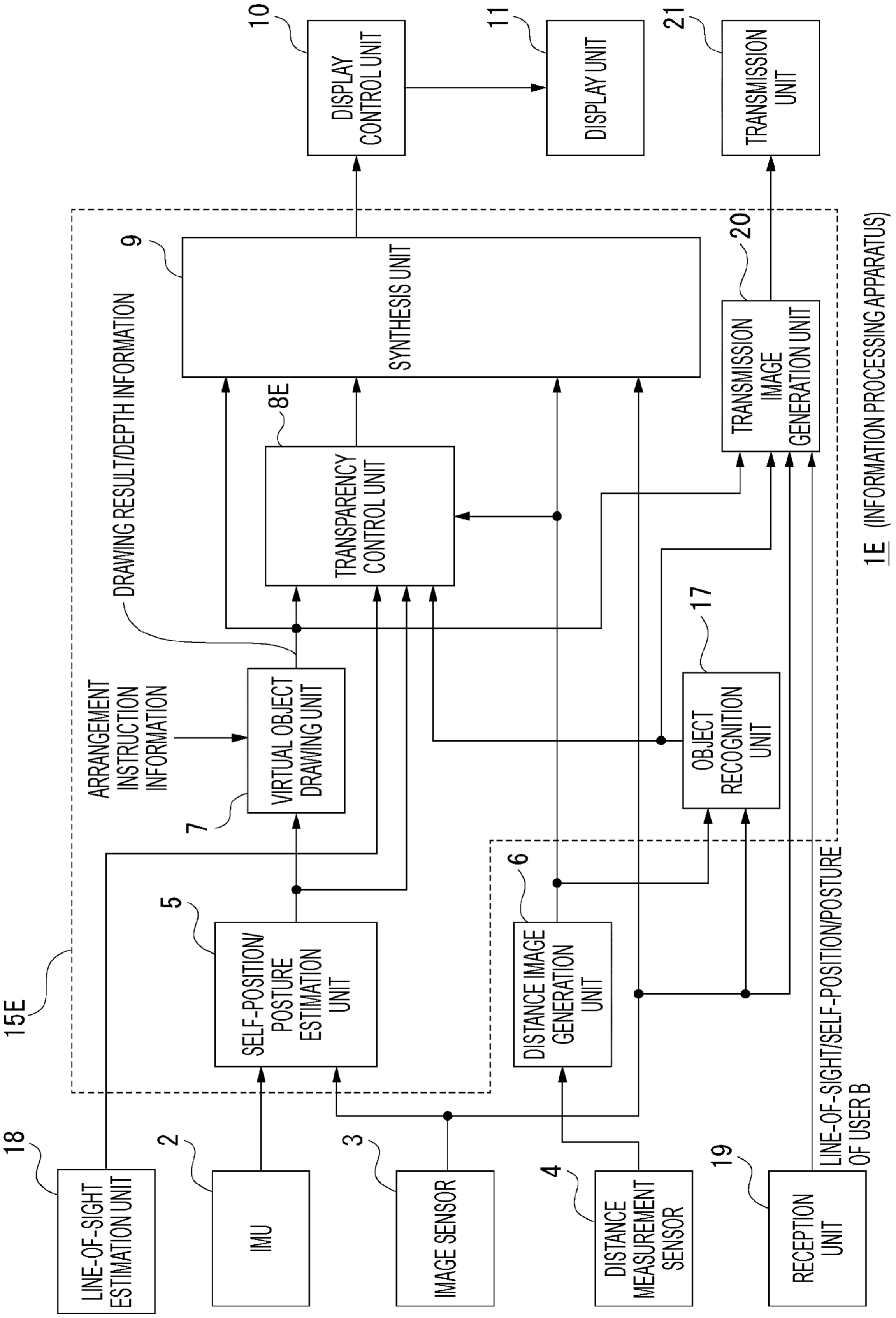
15E
18
LINE-OF-SIGHT ESTIMATION UNIT
2
IMU
3
IMAGE SENSOR
4
DISTANCE MEASUREMENT SENSOR
19
RECEPTION UNIT
LINE-OF-SIGHT/SELF-POSITION/POSTURE OF USER B
5
SELF-POSITION/ POSTURE ESTIMATION UNIT
6
DISTANCE IMAGE GENERATION UNIT
7
VIRTUAL OBJECT DRAWING UNIT
ARRANGEMENT INSTRUCTION INFORMATION
DRAWING RESULT/DEPTH INFORMATION
17
OBJECT RECOGNITION UNIT
8E
TRANSPARENCY CONTROL UNIT
9
SYNTHESIS UNIT
20
TRANSMISSION IMAGE GENERATION UNIT
10
DISPLAY CONTROL UNIT
11
DISPLAY UNIT
21
TRANSMISSION UNIT
1E (INFORMATION PROCESSING APPARATUS)

FIG. 18

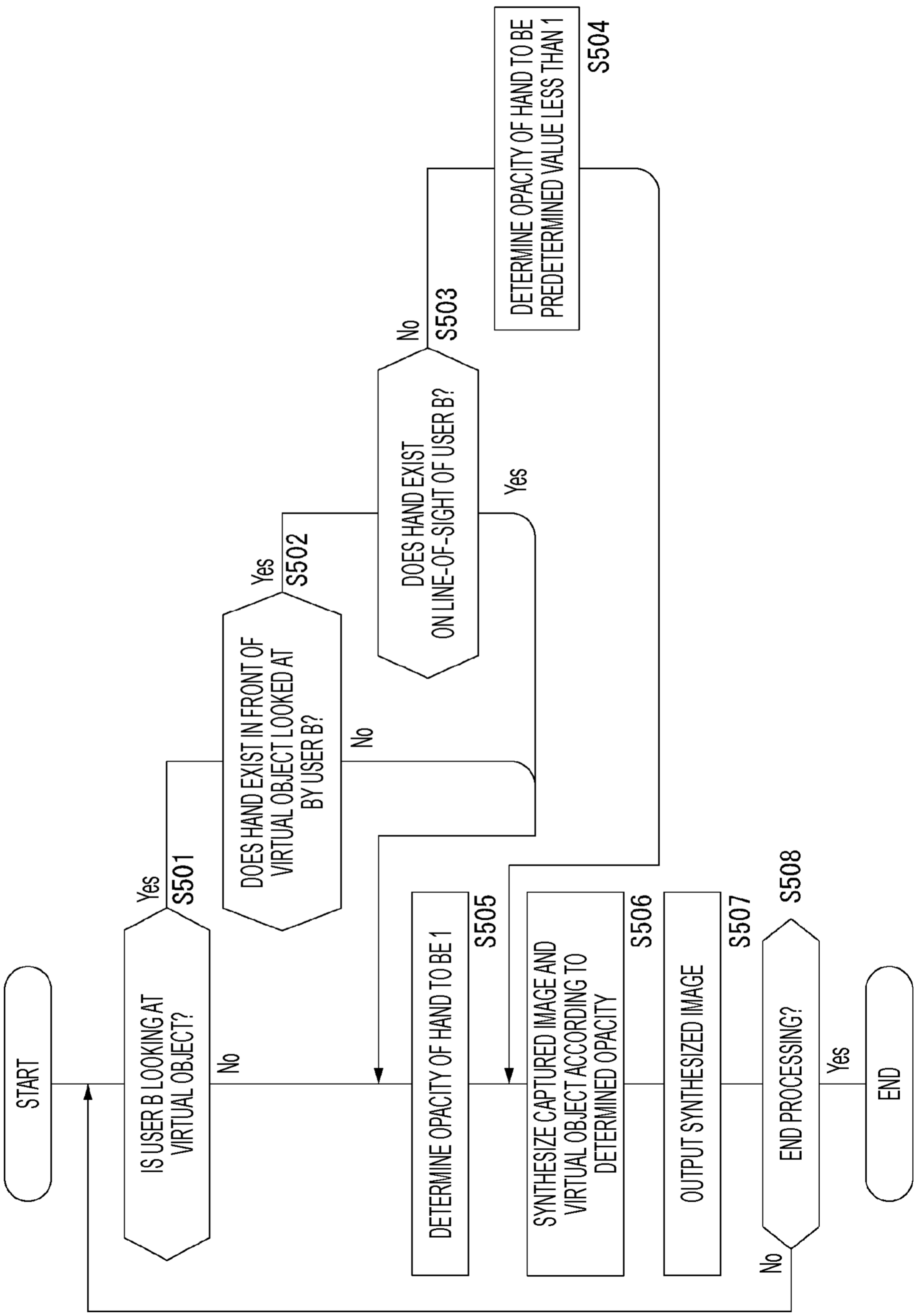
START
IS USER B LOOKING AT VIRTUAL OBJECT?
S501
Yes
No
DOES HAND EXIST IN FRONT OF VIRTUAL OBJECT LOOKED AT BY USER B?
S502
Yes
No
DOES HAND EXIST ON LINE-OF-SIGHT OF USER B?
S503
No
Yes
DETERMINE OPACITY OF HAND TO BE PREDETERMINED VALUE LESS THAN 1
S504
DETERMINE OPACITY OF HAND TO BE 1
S505
SYNTHESIZE CAPTURED IMAGE AND VIRTUAL OBJECT ACCORDING TO DETERMINED OPACITY
S506
OUTPUT SYNTHESIZED IMAGE
S507
END PROCESSING?
S508
Yes
No
END

FIG. 19

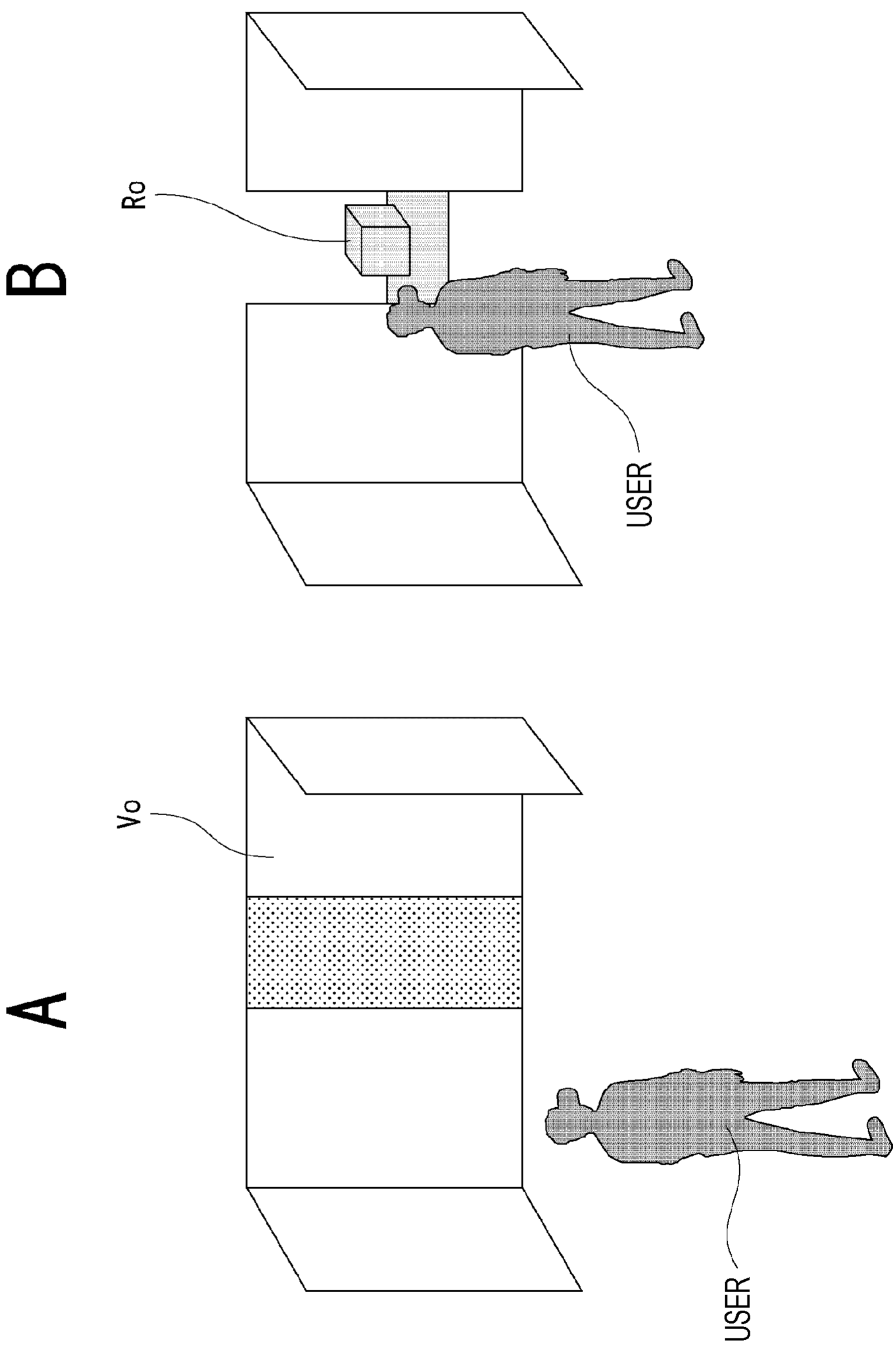

FIG. 20

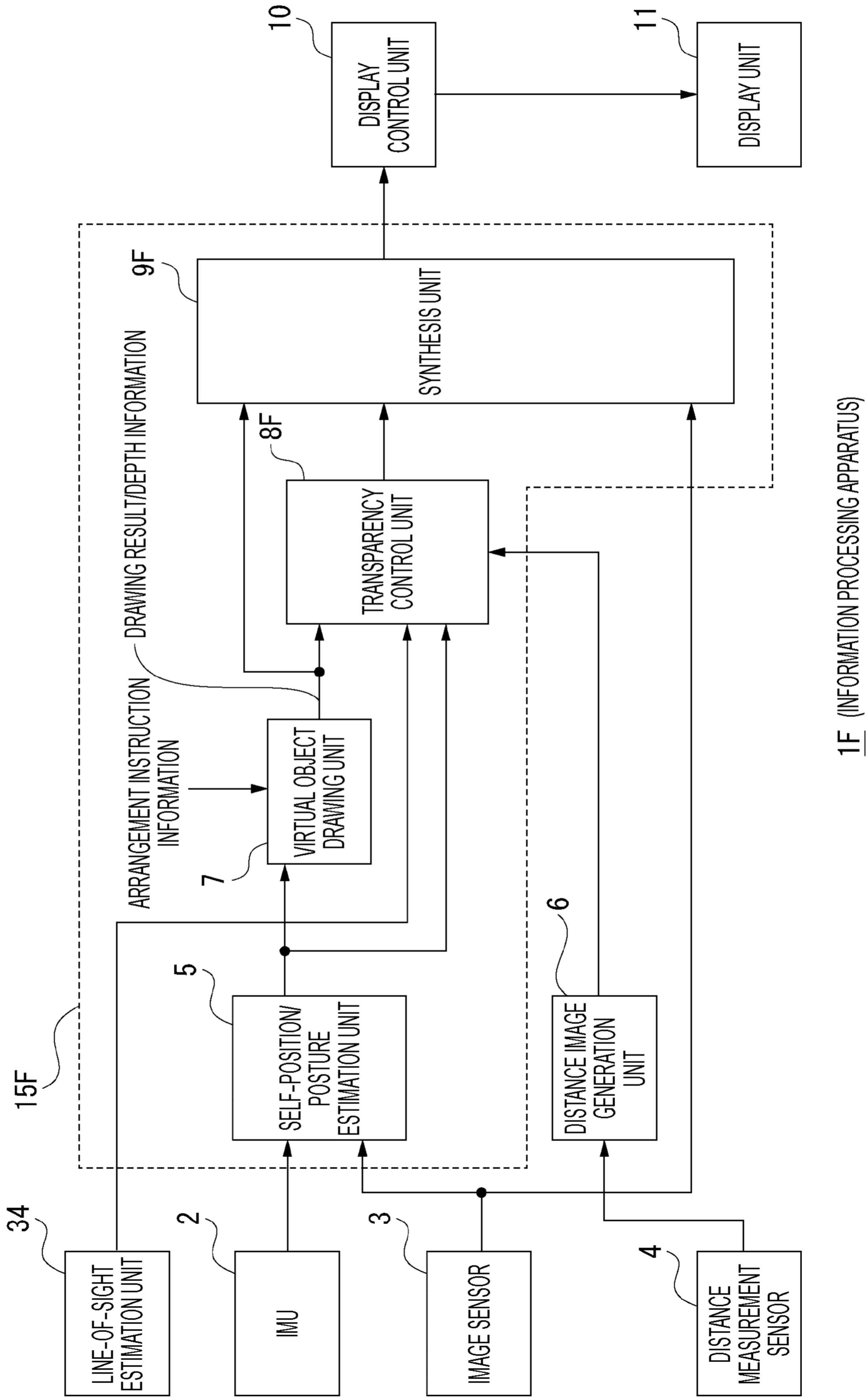
DISPLAY CONTROL UNIT
DISPLAY UNIT
SYNTHESIS UNIT
TRANSPARENCY CONTROL UNIT
DRAWING RESULT/DEPTH INFORMATION
ARRANGEMENT INSTRUCTION INFORMATION
VIRTUAL OBJECT DRAWING UNIT
SELF-POSITION/ POSTURE ESTIMATION UNIT
DISTANCE IMAGE GENERATION UNIT
LINE-OF-SIGHT ESTIMATION UNIT
IMU
IMAGE SENSOR
DISTANCE MEASUREMENT SENSOR
10
11
9F
8F
7
5
6
15F
34
2
3
4
1F (INFORMATION PROCESSING APPARATUS)

FIG. 21

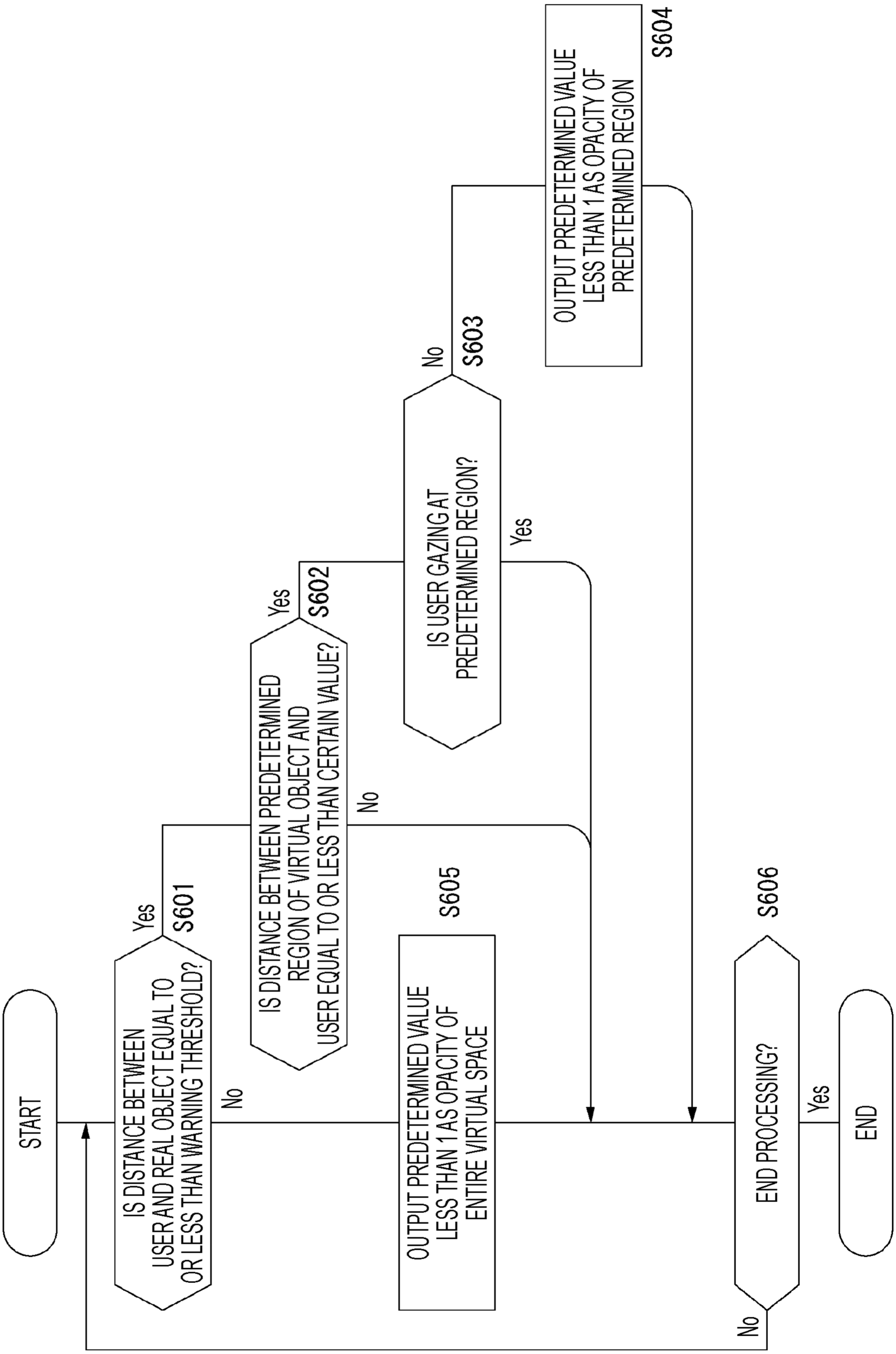
START
IS DISTANCE BETWEEN USER AND REAL OBJECT EQUAL TO OR LESS THAN WARNING THRESHOLD?
S601
Yes
No
IS DISTANCE BETWEEN PREDETERMINED REGION OF VIRTUAL OBJECT AND USER EQUAL TO OR LESS THAN CERTAIN VALUE?
S602
Yes
No
IS USER GAZING AT PREDETERMINED REGION?
S603
Yes
No
OUTPUT PREDETERMINED VALUE LESS THAN 1 AS OPACITY OF PREDETERMINED REGION
S604
OUTPUT PREDETERMINED VALUE LESS THAN 1 AS OPACITY OF ENTIRE VIRTUAL SPACE
S605
END PROCESSING?
S606
Yes
No
END

**INTERNATIONAL SEARCH REPORT**

International application No.
**PCT/JP2024/015844**

**A. CLASSIFICATION OF SUBJECT MATTER**

***G06F 3/01***(2006.01)i; ***G06T 19/00***(2011.01)i; ***G09G 5/00***(2006.01)i; ***G09G 5/377***(2006.01)i
FI: G06F3/01 510; G09G5/00 550C; G09G5/00 530M; G09G5/377 100; G06T19/00 300B

According to International Patent Classification (IPC) or to both national classification and IPC

**B. FIELDS SEARCHED**

Minimum documentation searched (classification system followed by classification symbols)

G06F3/01; G06T19/00; G09G5/00; G09G5/377

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-171309 A (BANDAI NAMCO ENTERTAINMENT INC.) 08 November 2018 (2018-11-08) paragraphs [0156]-[0161], fig. 15 | 1-3, 14-16 |
| Y | | 2-6 |
| A | | 7-13 |
| X | US 2021/0183135 A1 (FACEBOOK TECHNOLOGIES, LLC) 17 June 2021 (2021-06-17) paragraphs [0033]-[0040], [0088]-[0090], fig. 1A, 1B | 1-3, 8, 15-16 |
| Y | | 4-6 |
| A | | 7, 9-14 |
| Y | WO 2019/176577 A1 (SONY CORPORATION) 19 September 2019 (2019-09-19) paragraphs [0165]-[0174], fig. 18 | 2-6 |
| A | JP 2022-188081 A (SONY GROUP CORPORATION) 20 December 2022 (2022-12-20) entire text, all drawings | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/015844**

**C. DOCUMENTS CONSIDERED TO BE RELEVANT**

| Category* | Citation of document, with indication, where appropriate, of the relevant passages | Relevant to claim No. |
|---|---|---|
| A | JP 2018-063567 A (CANON KABUSHIKI KAISHA) 19 April 2018 (2018-04-19) entire text, all drawings | 1-16 |
| A | JP 2021-002290 A (CANON KABUSHIKI KAISHA) 07 January 2021 (2021-01-07) entire text, all drawings | 1-16 |
| A | JP 2021-009270 A (SEIKO EPSON CORPORATION) 28 January 2021 (2021-01-28) entire text, all drawings | 1-16 |
| A | JP 2018-190447 A (CANON MARKETING JAPAN INC.) 29 November 2018 (2018-11-29) entire text, all drawings | 1-16 |

Form PCT/ISA/210 (second sheet) (July 2022)

**INTERNATIONAL SEARCH REPORT**
**Information on patent family members**

International application No.
**PCT/JP2024/015844**

| Patent document cited in search report | Publication date (day/month/year) | Patent family member(s) | Publication date (day/month/year) |
|---|---|---|---|
| JP 2018-171309 A | 08 November 2018 | (Family: none) | |
| US 2021/0183135 A1 | 17 June 2021 | (Family: none) | |
| WO 2019/176577 A1 | 19 September 2019 | US 2021/0020141 A1<br>paragraphs [0197]-[0206], fig. 18<br>EP 3767432 A1<br>KR 10-2020-0130810 A | |
| JP 2022-188081 A | 20 December 2022 | US 2020/0209951 A1<br>entire text, all drawings<br>WO 2018/230160 A1<br>EP 3640786 A1<br>CN 110770688 A | |
| JP 2018-063567 A | 19 April 2018 | (Family: none) | |
| JP 2021-002290 A | 07 January 2021 | US 2020/0401805 A1 | |
| JP 2021-009270 A | 28 January 2021 | US 2021/0003847 A1<br>entire text, all drawings | |
| JP 2018-190447 A | 29 November 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022044124 A